# EUROPÄISCHE PATENTSCHRIFT

(11) **EP 3 681 673 B1**
(45) Veröffentlichungstag und Bekanntmachung des Hinweises auf die Patenterteilung: **05.06.2024**
(21) Anmeldenummer: 18743803.1
(22) Anmeldetag: 23.07.2018
(51) Int. Cl.: B24B 33/06, B24B 51/00

(54) **VERFAHREN UND VORRICHTUNG ZUR FEINBEARBEITUNG VON ZYLINDRISCHEN WERKSTÜCKFLÄCHEN**
METHOD AND DEVICE FOR FINE MACHINING CYLINDRICAL WORKPIECE SURFACES
PROCÉDÉ ET DISPOSITIF DE FINITION DE SURFACES DE PIÈCE CYLINDRIQUES

(30) Priorität: 14.09.2017 DE 102017121269
(43) Veröffentlichungstag der Anmeldung: 22.07.2020
(73) Patentinhaber: Microcut Ltd, 2543 Lengnau (CH)
(72) Erfinder: MAAG, Urs, 4514 Lommiswil (CH); KOHLER, Thomas, 4562 Biberist (CH); PALUMBO, Maco, 2540 Genchen (CH)
(74) Vertreter: Ostertag & Partner Patentanwälte mbB
(86) Internationale Anmeldenummer: PCT/EP2018/069908
(87) Internationale Veröffentlichungsnummer: WO 2019/052724

(56) Entgegenhaltungen:
- EP-A1- 0 496 303
- EP-A1- 1 815 944
- EP-B1- 1 815 944
- WO-A1-92/07687
- WO-A1-97/26113
- WO-A1-2006/029180
- WO-A1-2016/037143
- DE-A1- 3 919 895
- DE-A1-102006 011 304
- DE-A1-102011 000 348
- DE-A1-102011 076 213
- DE-A1-102014 018 541
- DE-A1-102015 203 051
- DE-B4-102006 011 304
- DE-C2- 3 919 895
- DE-U1-202012 008 938
- JP-B2- 3 148 034
- US-A- 3 451 175
- US-A- 3 653 855
- US-A- 4 524 543
- US-A1- 2010 029 179

## Beschreibung

Die vorliegende Erfindung betrifft ein Verfahren zur Feinbearbeitung nach dem Oberbegriff des Anspruchs 1. Ferner betrifft die vorliegende Erfindung eine Vorrichtung zum Bearbeiten von zylindrischen Werkstückflächen, nach dem Oberbegriff des Anspruchs 13.

Die vorliegende Erfindung betrifft generell das Gebiet der Feinbearbeitung von zylindrischen Werkstückflächen. Unter einer solchen Feinbearbeitung sollen vorliegend insbesondere Bearbeitungsvorgänge verstanden werden, bei denen an einem Werkstückrohling bereits mittels eines Zerspanwerkzeuges wie eines Drehwerkzeuges, eines Bohrers oder dergleichen eine zylindrische Werkstückfläche hergestellt worden ist und bei denen diese spanend (insbesondere mit definierter geometrischer Schneide) hergestellte zylindrische Werkstückfläche noch hinsichtlich ihrer Qualität zu verbessern ist. Dies kann insbesondere eine Verbesserung der Oberflächenbeschaffenheit sein, kann jedoch auch eine Verbesserung der Formhaltigkeit, der Maßhaltigkeit oder sonstiger Qualitätsmerkmale einer zylindrischen Werkstückfläche sein. Die feinzubearbeitenden zylindrischen Werkstückflächen können auch durch Laserbearbeitung, durch Funkenerosion oder durch Abformen eines Kernes, durch Gießen, durch 3D-Druck etc. hergestellt werden.

Typische Formfehler sind Unrundheiten, Vorweiten, Welligkeiten, Konizitäten oder Bananenformen. Ferner werden häufig Werkstücke mit einer Maßhaltigkeit von wenigen Mikrometern verlangt.

Eine typische Fein- bzw. Feinstbearbeitungstechnik ist das sogenannte Honen. Das Honen gehört zu den spanenden Fertigungsverfahren mit geometrisch unbestimmter Schneide. Andere derartige Verfahren sind Schleifen, Läppen, Polieren.

Beim Honen werden häufig eine Drehbewegung, eine Vorschubbewegung und eine Radialhubbewegung miteinander kombiniert. Ein Honwerkzeug weist zu diesem Zweck häufig eine oder eine Mehrzahl von Honleisten auf, die beispielsweise mit einer Federkonstruktion radial nach außen gedrückt sein können.

Aus dem Dokument EP 1 236 539 A2 ist ein Verfahren zur Honbearbeitung bekannt, wobei mit einem Dornhonwerkzeug entweder gleich oder im Anschluss an ein Dornhonen mit dem gleichen Werkzeug eine Nachbearbeitung durchgeführt wird, bei der das Verhältnis von Hubgeschwindigkeit zur Drehzahl des Werkzeuges deutlich erhöht wird. Hierdurch soll eine bessere Kreuzstruktur der Honspuren erreicht werden, die wiederum ein besseres Ölhaltevermögen ermöglicht.

Das Dokument US 2010/0029179 A1 offenbart ein Honsystem für eine Werkstückbohrung, mit einem Honwerkzeug, das an einer Drehspindel gelagert ist, wobei das Honwerkzeug wenigstens eine radial bewegliche Honleiste aufweist. Ein Zustellsystem beinhaltet ein bewegbares Zustellelement, das automatisch steuerbar ist, um eine Zustellkraft gegen das Honwerkzeug auszuüben, und zwar um die wenigstens eine Honleiste radial nach außen zu drücken. Das Werkzeug insgesamt kann entlang einer Bearbeitungsachse axial vorgeschoben werden. Ein hiermit durchgeführtes Honverfahren beinhaltet, das Zustellelement zum radialen Andrücken der Honleiste innerhalb der Bohrung des Werkstückes zu betätigen, während sich das Honwerkzeug dreht. Sobald ein erster Kontakt zustande gekommen ist, wird die Zustellrate verringert.

Das Dokument WO 2006/029180 A1 betrifft ebenfalls ein Verfahren, bei dem eine Honleiste auf unterschiedliche Arten betätigt werden kann, nämlich mit zwei unterschiedlichen Zustellkraftniveaus.

Ferner offenbart das Dokument WO 97/26113 ein Verfahren und eine Maschine zum Bearbeiten von Löchern, und zwar insbesondere von Kleinstlöchern in beispielsweise keramischen Rohlingen. Als Honwerkzeug wird ein Draht verwendet, wobei zwischen einem Rohling und dem Draht eine oszillierende Translationsbewegung eingerichtet wird. Insbesondere wird der Draht maschinell freifliegend in das Rohloch eingeführt und entsprechend dem Bearbeitungsfortschritt relativ zum Rohling gestoßen bzw. vorgeschoben. Die Translationsbewegung kann mit einer Frequenz im Bereich von 0,1 Hz bis in den Kiloherzbereich hinein durchgeführt werden. Zug- und/oder Druckkräfte können gemessen und zur Steuerung der oszillierenden Arbeitsbewegung bzw. des Relativvorschubs zum Rohling verwendet werden. Der Draht wird automatisch aus einem Magazin ablaufend zugeführt und mit Schleifmittel versehen, bevor er in das Rohloch freifliegend eintaucht.

Das Dokument WO 01/92815 A1 offenbart eine automatische Vorrichtung für das Prüfen einer Bohrung in einem kleinen Werkstück. Ein Sensor kann dabei das Zurückweichen des Werkstückes bei einem bestimmten Prüfnadeldruck erfassen.

Das Dokument WO 01/45902 A1 offenbart eine Vorrichtung und ein Verfahren zum konzentrischen Rundschleifen eines Werkstückes.

Auch offenbart das Dokument DE 10 2012 216 360 A1 ein Honsystem, insbesondere zum Honen auf einem Bearbeitungszentrum, mit einem Werkzeugkopf, der lösbar an einer rotierend antreibbaren Maschinenspindel einer Werkzeugmaschine fixierbar ist, und mit einem Honwerkzeug, das an dem Werkzeugkopf ankoppelbar ist. Das Honwerkzeug weist Honleisten auf, die über einen werkzeugseitigen Verstellmechanismus quer zur Drehachse verstellbar sind. Der Werkzeugkopf beinhaltet eine mit einem Stellmotor versehene Antriebseinrichtung zur Betätigung des Verstellmechanismus.

Schließlich ist es aus dem Dokument "Hochgenau in Maß und Form", Schweizer Präzisionsfertigungstechnik, Juli 2017, bekannt, ein einteiliges und einlagig mit Diamant oder CBN belegtes Werkzeug (mit undefinierter Schneide), das einen konischen und einen zylindrischen Abschnitt aufweist, kraftgesteuert mit Rotations- und Translationsbewegungen in mehreren Hüben durch eine zu bearbeitende Bohrung zu treiben. Diese Hontechnik stellt eine Weiterentwicklung des Dornhonens (Einhubhonens) dar. Insbesondere ist diese Technik wirtschaftlich zur Funktionsoptimierung von kleinen und unterbrochenen Durchgangsbohrungen, insbesondere auch für harte und schwer zerspanbare Werkstoffe. Form, Oberfläche und Durchmesser einer Bohrung können prozesssicher in engste Toleranzfelder gefertigt werden.

Aus der US 3 451 175 A ist eine Honmaschine bekannt, mit der zylindrische Bohrungen bearbeitet werden können. Das Werkzeug wird über einen mehrstufigen Riemenantrieb in Drehung versetzt. Der Drehung sind periodische Auf- und Abbewegungen überlagert, die von einem Stangengetriebe erzeugt werden.

Aus der US 4 524 543 ist eine Honmaschine bekannt, bei der ein sich drehendes Werkzeug zusätzliche axiale Schwingungen ausführt. Das Drehmoment wird gemessen und auf einem konstanten Wert gehalten, indem die relative seitliche Anordnung zwischen Werkstück und Werkzeug verändert wird.

Die DE 10 2006 011 304 A1 offenbart ein Verfahren zur Finishbearbeitung eines Werkstücks. Das Werkzeug wird dem Werkstück mit einer Geschwindigkeit zugestellt, die während des Fertigfinishens degressiv abnimmt.

Die JP 3148034 B offenbart ein Verfahren zur Nachbearbeitung von Zähnen eines Zahnrades. Ein Ring, auf dessen Innenseite Schleifzähne angeordnet sind, wird mit einer Geschwindigkeit dem Zahnrad zugestellt, die von den Signalen eines Sensors abhängt. Der Sensor erfasst Auslenkungen einer Welle, auf welcher der Ring befestigt ist.

Die US 3 653 855 offenbart ein rotierendes Schleifwerkzeug, das einem Werkzeug in axialer Richtung mit einer Kraft zugestellt wird, die von einem Aktuator vorgegeben wird. Diese Kraft hängt von Messwerten ab, die von einer Messnadel gewonnen werden, welche die Werkstückoberfläche abtastet.

Aus der EP 0 496 303 A1 ist eine Rundschleifmaschine für Halbleiterrohlinge bekannt, bei der die Vorschubgeschwindigkeit einer Radspindel so gesteuert wird, dass die Belastung des Radspindelmotors auf einem konstanten Wert gehalten wird.

Aus der WO 92/07687 A1 ist ein Dorhhonverfahren gemäß dem Oberbegriff des Anspruchs 1 und eine Vorrichtung gemäß dem Oberbegriff des Anspruchs 13 bekannt. Der üblichen Dreh- und Hubbewegung des Werkzeugs ist eine kurzhubige Ultraschall-Eigenschwingung mit Frequenzen zwischen 16 und 40 KHz überlagert.

Es ist vor diesem Hintergrund eine Aufgabe der Erfindung, ein verbessertes Feinbearbeitungsverfahren, eine verbesserte Feinbearbeitungsvorrichtung, sowie ein verbessertes Feinbearbeitungswerkzeug anzugeben.

Die obige Aufgabe wird gelöst durch ein Verfahren gemäß Anspruch 1.

Ferner wird die Aufgabe gelöst durch eine Vorrichtung zum Bearbeiten von zylindrischen Werkstückflächen gemäß Anspruch 13..

Bei dem erfindungsgemäßen Fein- bzw. Feinstbearbeitungsverfahren kann das verwendete Werkzeug ein Dornhonwerkzeug sein, das einen zylindrischen hülsenartigen Honabschnitt mit einer häufig schraubenförmigen Oberflächenstruktur besitzt. Auch bei Verwendung eines derartigen Dornhonwerkzeuges ist eine geregelte Vorschubgeschwindigkeit und eine Überlagerung einer Oszillation auf eine geregelte Vorschubgeschwindigkeit vorteilhaft. Bevorzugt ist es jedoch, wenn das Feinbearbeitungswerkzeug ein einteiliges Werkzeug ist, das im Wesentlichen dornförmig ausgebildet ist, mit einem Konusabschnitt und einem Schaftabschnitt.

Die zylindrische Werkstückfläche des Werkstückrohlings bzw. Werkstückes ist eine Bohrung. Die Werkstückfläche ist vorzugsweise mittels eines Spanwerkzeuges erzeugt worden, das eine geometrisch bestimmte Schneide hat, also beispielsweise ein Bohrer oder dergleichen. Die Werkstückfläche kann jedoch auch durch andere Bearbeitungsarten hergestellt sein, beispielsweise durch Laserbearbeitung, durch Funkenerosion oder durch Abformen eines Kernes (z.B. CIM Ceramic Injection Molding oder isostatisches Pressen mit nachfolgendem Entbindern und Sinterprozess), durch Gießen, durch 3D-Druck etc.

Das Feinbearbeitungswerkzeug ist in der Regel mit einem Schleifwerkstoff beschichtet, also beispielsweise mit Diamant, CBN oder dergleichen.

Das Verfahren wird dabei vorzugsweise so durchgeführt, dass ein Konusabschnitt des Werkzeuges als erstes mit der zylindrischen Werkstückfläche in Kontakt kommt. Die zylindrische Werkstofffläche ist dabei von dem Spanwerkzeug vorzugsweise so hergestellt worden, dass gegenüber einem Sollmaß ein leichtes Untermaß eingerichtet ist, das mittels des Feinbearbeitungsprozesses auf das Sollmaß zu bringen. Mit der Anlage der konischen Fläche des Konusabschnittes an zunächst einer Umfangskante (Ringkante) der zylindrischen Werkstückfläche und durch die eingerichtete relative Vorschubgeschwindigkeit kann eine Feinbearbeitung hoher Qualität erreicht werden.

Im Stand der Technik wird bei Erreichen einer gewissen Relativkraft zwischen Werkzeug und Werkstück sofort ein Rückhub entgegen der Vorschubgeschwindigkeit eingeleitet, um ein "Festfressen" des Werkzeuges an dem Werkstück zu verhindern. Der Prozess war daher insgesamt relativ zeitaufwändig.

Durch die Maßnahme, die Prozessgröße durch Verändern der relativen Vorschubgeschwindigkeit stetig zu regeln, derart, dass die relative Vorschubgeschwindigkeit sich umso mehr ändert, je mehr ein Istwert der Prozessgröße von einem Sollwert der Prozessgröße abweicht, kann eine deutliche Erhöhung der Bearbeitungsgeschwindigkeit erreicht werden. Denn in vielen Fällen kann ein Bearbeitungsvorgang in einem Hub durchgeführt werden, also mit einer Vorwärtsbewegung und ggf. mit variierender Geschwindigkeit, ohne dass ein Rückhub eingeleitet werden muss.

Dieser Prozess kann dabei bis zu einer Halbierung der bislang üblichen Bearbeitungsgeschwindigkeit führen.

Ferner ergeben sich insbesondere auch für das Werkzeug deutlich weniger Belastungsspitzen. Immer dann, wenn der stetige Regler bemerkt, dass die Prozessgröße ansteigt, wird die relative Vorschubgeschwindigkeit beispielsweise etwas zurückgenommen, um auf diese Weise beispielsweise zu vermeiden, dass ein Schwellenwert erreicht wird, bei dem ein Rückhub dann zwangsläufig einzuleiten ist. Denn ein derartiger Schwellenwert kann auch bei dem vorliegenden Verfahren nach wie vor eingerichtet sein. Aufgrund der stetigen Regelung wird dieser Schwellenwert jedoch deutlich weniger häufig erreicht, so dass keine oder zumindest weniger Rückhubvorgänge erfolgen.

Es kann mittels des Feinbearbeitungswerkzeuges auch ein Kreuzschliff an der zylindrischen Werkstückoberfläche erzielt werden, insbesondere bei der Oszillation (Schnellhub) oder mit einem "Ausfunken". Insbesondere mehrere Richtungswechsel können zudem einen positiven Einfluss auf eine Gratbildung an Querbohrungen haben.

In einer bevorzugten Variante beinhaltet daher das Feinbearbeitungsverfahren wenigstens einen Rückhub, der ggf. aktiv von einer Steuereinrichtung also insbesondere dann einzuleiten ist, wenn dies aus übergeordneten Gründen vorteilhaft ist, ohne einen bestimmten Schwellenwert der Prozessgröße erreicht zu haben.

Ferner ergibt sich mit dem vorliegenden Verfahren keine Tendenz zum Blockieren des Werkzeuges aufgrund eines "Einschraub-Effektes", insbesondere mit zusätzlichem Schnellhub.

Das Werkzeug weist vorzugsweise eine axiale Länge auf, die ein Mehrfaches größer ist als die entsprechende axiale Länge der zu bearbeitenden zylindrischen Werkstückfläche. Vorzugsweise liegt das Verhältnis von axialer Gesamtlänge des Werkzeuges zu der axialen Länge der zylindrischen Werkstückfläche in einem Bereich von 500:1 bis 2:1, insbesondere in einem Bereich von 300:1 bis 10:1.

Das Verhältnis von erster axialer Länge und zweiter axialer Länge (von Konusabschnitt bzw. Schaftabschnitt) liegt vorzugsweise in einem Bereich von 1:0,1 bis 1:2 (= 1:2 bis 10:1), derart, dass der Konusabschnitt zehn Mal so lang sein kann wie der Schaftabschnitt, jedoch auch nur halb so lang sein kann wie der Schaftabschnitt. Vorzugsweise liegt das Verhältnis in einem Bereich von 1:0,3 bis 1:0,8.

Die zylindrische Werkstückfläche ist, wie gesagt, eine Bohrungsfläche.

Die Relativrotation zwischen Werkzeug und Werkstückrohling kann vorzugsweise mit Drehzahlen von bis zu 10.000 Umdrehungen pro Minute eingerichtet werden. Vorzugsweise erfolgt das Erzeugen der Relativrotation durch Drehen des Werkstückrohlinges um die Bearbeitungsachse herum, beispielsweise mittels einer Werkzeugmaschine, insbesondere wenn das Verfahren auf einem Honmodul durchgeführt wird. Bei einer Honmaschine kann jedoch auch das Werkzeug selber relativ zu einem stehenden Werkstückrohling in Drehung versetzt werden.

Die relative Vorschubgeschwindigkeit zwischen dem Werkzeug und dem Werkstückrohling wird vorzugsweise durch Bewegen des Werkzeuges eingerichtet, kann jedoch auch durch Bewegen des Werkstückrohlings oder durch eine Kombination hiervon eingerichtet werden. Die Richtung entlang der Bearbeitungsachse ist vorzugsweise parallel zu dieser.

Die Prozessgröße, die eine Funktion einer Relativkraft zwischen dem Werkzeug und dem Werkstückrohling ist, kann insbesondere ein Drehmoment dazwischen sein. Alternativ hierzu ist es möglich, dass die Prozessgröße ein elektrischer Motorstrom eines elektrischen Motors ist, der die relative Vorschubgeschwindigkeit erzeugt, und/oder eines Motors, der die Relativrotation erzeugt. Generell ist es auch möglich, hinsichtlich der Prozessgröße auf einen Druck abzustellen, wenn beispielsweise eine pneumatische Zylinder/Ventil-Lösung verwendet wird, um Relativbewegungen zwischen Werkzeug und Werkstück zu dämpfen, und/oder um das Werkzeug in Vorschubrichtung zu bewegen.

Dabei kann die Prozessgröße eine Vielzahl von Prozessgrößenwerten annehmen, es wird also nicht nur auf einen einzelnen Schwellenwert abgestellt. Eine Vielzahl von Prozessgrößenwerten soll insbesondere eine Anzahl von 3 oder 4 oder deutlich mehr unterschiedlichen Prozessgrößenwerten sein.

Die Prozessgröße kann am Werkzeug oder am Werkstück gemessen werden. Zur Ermittlung der Prozessgröße kann wenigstens ein Sensor vorgesehen sein. Der Sensor kann ein herkömmlicher Analogsensor sein, beispielsweise ein Wegsensor oder ein Kraftsensor. Ein Wegsensor kann insbesondere in Verbindung mit einer in Messrichtung beweglichen Komponente und Feder- und/oder Dämpfungseinrichtung vorgesehen sein (oder eines Elementes, das eine Kraft/Weg-Kennlinie darstellen kann). Es versteht sich jedoch, dass ein Signal eines derartigen "Analog"-Sensors in der Regel zur Verarbeitung in einer Steuervorrichtung in die digitale Domaine umgewandelt wird. Alternativ ist es auch möglich, Sensoren zu verwenden, die von vornherein digitale Daten bereitstellen, jedoch in jedem Fall eine Vielzahl von unterschiedlichen Prozessgrößenwerten erfassen können.

Unter einem stetigen Regeln wird daher vorliegend insbesondere ein Regelvorgang verstanden, der kein klassisches Zweipunkt- oder Dreipunkt-Verhalten aufweist. Vielmehr kann ein stetiges Regeln eine Vielzahl von unterschiedlichen Prozessgrößenwerten verarbeiten und/oder kann eine Vielzahl von unterschiedlichen Stellgrößen erzeugen.

Der stetige Regler kann insbesondere ein Proportionalregler (P-Regler) sein. Hierbei ist eine Stellgröße bzw. Reglerausgangsgröße (beispielsweise ein Ansteuerungswert für die relative Vorschubgeschwindigkeit) in der Regel proportional zu einer Regeldifferenz (also vorzugsweise einer Differenz zwischen einem Istwert der Prozessgröße und einem Sollwert der Prozessgröße).

Bei einem Proportionalregler ist generell zwar eine schnelle Reaktion auf Veränderungen der Ist-Größe möglich. Allerdings verbleibt bei einem Proportionalregler in der Regel eine gewisse Regelabweichung zwischen Sollwert und Istwert. Dies ist jedoch vorliegend nicht von großem Nachteil, da es nicht darauf ankommt, einen bestimmten Wert der Prozessgröße oder der relativen Vorschubgeschwindigkeit einzurichten, sondern flexibel und schnell auf Änderungen des Prozesses und auf Änderungen von Störgrößen zu reagieren.

Ggf. kann jedoch ein solcher Proportionalregler auch mit einem Integralregler und/oder mit einem Differentialregler kombiniert werden (beispielsweise zu einem sogenannten Pl-Regler oder zu einem PD-Regler oder zu einem PID-Regler).

Generell kann eine maximale Vorschubgeschwindigkeit eingestellt werden, die dann bedarfsweise verringert wird, wenn ein Bearbeitungsmoment ansteigt.

In anderen Fällen ist es denkbar, die stetige Reglung so einzurichten, dass dann, wenn beispielsweise der Istwert der Prozessgröße unter einen Sollwert der Prozessgröße abfällt, die Vorschubgeschwindigkeit erhöht wird. Vorzugsweise wird bei einer Verringerung der gemessenen Prozessgröße die Geschwindigkeit generell erhöht.

Vorzugsweise wird also erfindungsgemäß vorgesehen, dass die relative Vorschubgeschwindigkeit bzw. der relative Vorschub zwischen dem Werkzeug und dem Werkstück stetig, insbesondere proportional zu der Prozessgröße geregelt wird, bei der es sich insbesondere um ein Relativdrehmoment zwischen Werkzeug und Werkstück handeln kann.

In vielen Fällen kann der eigentliche Feinbearbeitungsprozess über einen längeren Zeitraum kontinuierlich und ohne Rückhub am Werkstück erfolgen. Aus übergeordneten Gründen, beispielsweise, um Späne zu entfernen, kann es jedoch auch sinnvoll sein, während des Feinbearbeitungsprozesses zwischendurch immer mal wieder einen Rückhub durchzuführen.

Parameter des Feinbearbeitungsprozesses lassen sich in Abhängigkeit von diversen Umgebungsparametern anpassen. Beispielsweise kann ein solcher Umgebungsparameter sein, ob das Feinbearbeitungswerkzeug neu ist oder bereits länger im Gebrauch ist. Hierdurch kann vermieden werden, dass ein neues, zu Anfang sehr "schnittiges" Werkzeug sich zu schnell in das Werkstück "hineinfrisst".

Der Regler ist vorzugsweise ein Proportionalregler, der auf Abweichungen der Ist-Prozessgröße von einer Soll-Prozessgröße abstellt. Ggf. kann auch auf ein Differential dieser Differenz abgestellt werden.

Der Sollwert der Prozessgröße kann ein konstanter Wert sein, kann jedoch auch über den Prozessverlauf ein veränderlicher Wert sein.

Die Aufgabe wird vollkommen gelöst.

Vorzugsweise wird eine Differenz zwischen dem Sollwert der Prozessgröße und dem Istwert der Prozessgröße einem Regler eingegeben, der eine Stellgröße ausgibt, die einen Antriebsmotor zum Erzeugen der Vorschubgeschwindigkeit ansteuert.

Hierdurch kann die Stellgröße unmittelbar Einfluss auf die Vorschubgeschwindigkeit haben.

Die Prozessgröße kann, wie gesagt, eine Axialkraft sein, ein Drehmoment sein, kann jedoch auch ein Motorstrom sein oder ein Druck einer Pneumatikanordnung.

Von besonderem Vorzug ist es, wenn die Prozessgröße eine Funktion einer axialen Relativkraft zwischen dem Werkzeug und dem Werkstückrohling ist.

Gemäß einer weiteren bevorzugten Ausführungsform wird eine axiale Vorschubbewegung unterbrochen, wenn eine axiale Relativkraft zwischen dem Werkzeug und dem Werkstückrohling einen Axialkraft-Schwellenwert überschreitet und/oder wenn ein relatives Drehmoment zwischen dem Werkzeug und dem Werkstückrohling einen Drehmoment-Schwellenwert überschreitet.

Dabei ist es von besonderem Vorzug, wenn nach dem Unterbrechen der Vorschubbewegung ein der Vorschubgeschwindigkeit entgegen gerichteter Rückhub durchgeführt wird.

Hierbei wird davon ausgegangen, dass der Bearbeitungsprozess nach dem Rückhub wieder erneut eingeleitet wird, also beispielsweise quasi von vorn begonnen wird.

Gemäß einer weiteren bevorzugten Ausführungsform wird eine zur Bearbeitung des Werkstückrohlings benötigte Arbeit erfasst. Hierbei kann beispielsweise über der Zeit ein Produkt von Weg und Drehmoment (oder Kraft) erfasst und verarbeitet, beispielsweise aufintegriert werden, um die Gesamtarbeit zu erfassen.

Die zur Bearbeitung des Werkstückrohlings benötigte Arbeit kann beispielsweise dazu verwendet werden, um festzustellen, ob ein Werkzeug noch hinreichend scharf ist oder ggf. ausgetauscht werden muss.

Erfindungsgemäß wird der Vorschubgeschwindigkeit zumindest abschnittsweise eine relative Oszillationsbewegung überlagert, die eine Frequenz in einem Bereich von 30 Hz bis 100 Hz aufweist und vorzugsweise eine Amplitude in einem Bereich von 0,5 mm bis 4 mm aufweist.

Hierdurch kann die Bearbeitungsgeschwindigkeit in vielen Fällen noch einmal deutlich erhöht werden.

Ferner ist es insgesamt bevorzugt, wenn vor dem Erzeugen der relativen Vorschubgeschwindigkeit ein Einfahr- bzw. Startprozess durchgeführt wird, bei dem erfasst wird, ob eine Bearbeitung des Werkstückrohlings mit dem Werkzeug möglich ist.

Hierbei kann beispielsweise abgefragt werden, ob der Werkstückrohling überhaupt eine Bohrung bzw. eine zylindrische zu bearbeitende Werkstückfläche aufweist. Ferner kann ggf. abgefragt werden, ob eine Bohrung zu klein oder zu groß ist.

Ferner ist es vorteilhaft, wenn das Werkzeug einen Konusabschnitt aufweist, wobei vor dem Erzeugen der relativen Vorschubgeschwindigkeit der Werkstückrohling und das Werkzeug relativ zueinander bewegt werden, bis der Konusabschnitt eine Ringkante des Werkstückrohlings berührt, wobei die hierbei eingerichtete axiale Relativposition zwischen dem Werkzeug und dem Werkstückrohling erfasst wird.

Diese Erfassung kann ein Indiz dafür sein, wie groß die Bohrung ist, die in das Werkstück zur Erzeugung der zylindrischen Werkstückfläche eingebracht worden ist. Ggf. kann diese axiale Relativposition dazu verwendet werden, um die Bearbeitung mittels eines Spanwerkzeuges von nachfolgenden Werkstücken zu beeinflussen, also beispielsweise die folgenden Bohrungen etwas größer oder etwas kleiner zu machen.

Gemäß einer weiteren vorteilhaften Ausführungsform, weist das Werkzeug einen Konusabschnitt auf, wobei der Werkstückrohling und das Werkzeug relativ zueinander in eine Einfahrposition bewegt werden, bis zumindest ein Teil des Konusabschnittes sich axial mit der zylindrischen Werkstückfläche überschneidet, eine Ringkante der zylindrischen Werkstückfläche jedoch von dem Werkzeug nicht berührt wird.

Hierdurch kann eine Ausgangsposition für den Feinbearbeitungsprozess schnell eingerichtet werden. Ferner kann durch Überprüfen, ob eine axiale Überschneidung von Konusabschnitt und zylindrischer Werkstückfläche möglich ist, überprüft werden, ob die zylindrische Werkstückfläche überhaupt vorhanden ist, ob beispielsweise in dem Werkstück eine Bohrung vorhanden ist.

Dabei ist es von besonderem Vorzug, wenn nach dem Erreichen der Einfahrposition die relative Vorschubgeschwindigkeit erzeugt und die Prozessgröße durch Verändern der relativen Vorschubgeschwindigkeit geregelt wird.

Dabei ist das Ziel, das Werkzeug möglichst schnell in Kontakt mit der zylindrischen Werkstückfläche zu bringen und diese zu bearbeiten, ohne einen Maximalwert der Prozessgröße (z.B. ein maximales Drehmoment) zu überschreiten. Der eigentliche geregelte Feinbearbeitungsprozess wird bei dieser Ausführungsform also gestartet, bevor das Werkzeug mit dem Konusabschnitt die Ringkante der zylindrischen Werkstückfläche kontaktiert. Dieser erste Kontakt kann aufgrund eines flachen Konuswinkels relativ diffus sein. Dies kann aber auch einen Vorteil haben, da die Prozessgröße dann in der Regel nicht so steil ansteigt und aufgrund der Regelung hinreichend Zeit vorhanden ist, die relative Vorschubgeschwindigkeit zu reduzieren. Für das Überwinden der Strecke von der Einfahrposition bis zu einer Kontaktposition eignet sich der stetige Regelungsprozess ganz besonders, da hierbei potenziell viel Zeit eingespart werden kann und somit eine möglichst hohe Einfahr-Geschwindigkeit angestrebt und erreicht werden kann.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Es zeigen:
- Fig. 1: eine schematische Darstellung einer Werkzeugmaschinenanordnung zur Durchführung eines Feinbearbeitungsverfahrens;
- Fig. 2: eine schematische Darstellung eines Feinbearbeitungsmoduls zur Durchführung eines Feinbearbeitungsverfahrens;
- Fig. 3: eine Darstellung des Feinbearbeitungsmoduls der Fig. 2, montiert an einer Werkzeugmontagestelle einer Werkzeugmaschine, insbesondere eines Bearbeitungszentrums;
- Fig. 4: eine alternative Ausführungsform einer erfindungsgemäßen Vorrichtung zur Feinbearbeitung von zylindrischen Werkstückflächen;
- Fig. 5: eine Darstellung eines Regelkreises zur Verwendung in einer Steuervorrichtung einer erfindungsgemäßen Feinbearbeitungsvorrichtung;
- Fig. 6: eine beispielhafte Regelcharakteristik des Regelkreises der Fig. 5;
- Fig. 7: ein Zeitablaufdiagramm von verschiedenen Zustandsgrößen eines beispielhaften Feinbearbeitungsprozesses zur Bearbeitung einer zylindrischen Werkstückfläche eines Werkstückes;
- Fig. 8: eine schematische Längsschnittansicht durch ein Feinbearbeitungsmodul zur Durchführung eines Feinbearbeitungsverfahrens;
- Fig. 9: eine Schnittansicht entlang der Linie IX-IX der Fig. 8;
- Fig. 10: eine perspektivische Detailansicht eines Schlittens des Feinbearbeitungsmoduls der Fig. 8; und
- Fig. 11: ein Flussdiagramm eines Verfahrens zur Feinbearbeitung einer zylindrischen Werkstückfläche.

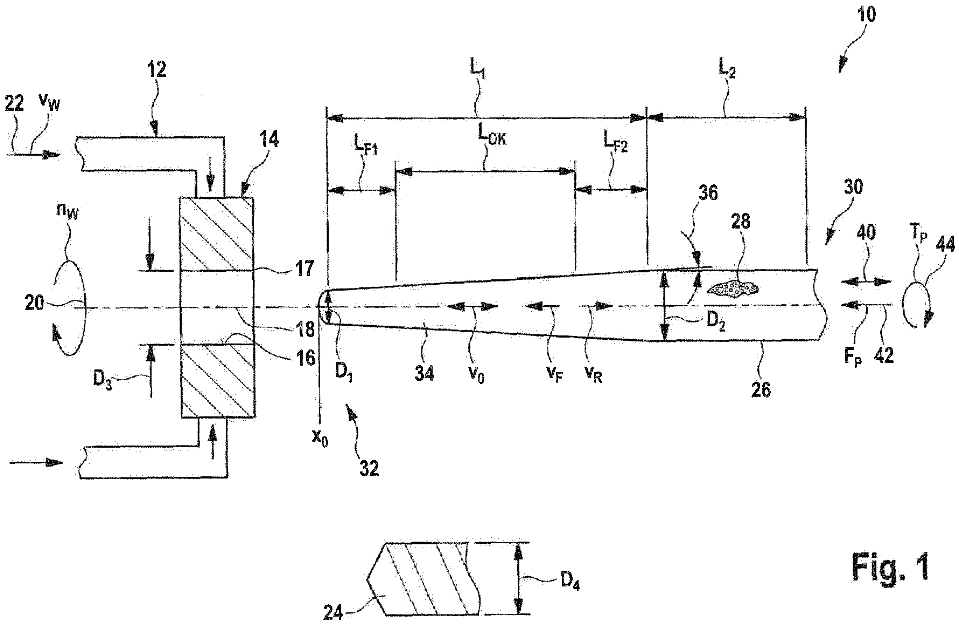

In Fig. 1 ist in schematischer Form eine Werkzeugmaschinenanordnung zur Bearbeitung von Werkstücken dargestellt und generell mit 10 bezeichnet.

Die Werkzeugmaschinenanordnung 10 beinhaltet eine Spanneinrichtung 12, mithilfe derer ein Werkstück 14 eingespannt werden kann. Das Werkstück 14, das vorliegend auch als Werkstückrohling bezeichnet wird, beinhaltet eine zylindrische Werkstückfläche 16, vorliegend in Form einer Bohrung. Die zylindrische Werkstückfläche 16 definiert an einer Stirnseite des Werkstückes 14 eine Ringkante 17.

Die Spanneinrichtung 12 ist dazu ausgebildet, das Werkstück 14 um eine Längsachse 18 in Drehung zu versetzen, und zwar mittels eines schematisch angedeuteten Rotationsantriebs 20, der das Werkstück 14 mit einer Drehzahl n_{W} in Drehung versetzen kann.

Der Spanneinrichtung 12 kann ferner ein Werkstück-Axialantrieb 22 zugeordnet sein, mittels dessen das Werkstück 14 mit einer Vorschubgeschwindigkeit v_{W} parallel zur Längsachse 18 angetrieben werden kann. In manchen Fällen kann die Spanneinrichtung 12 auch so ausgebildet sein, dass das Werkstück 14 in einer Richtung quer zu der Längsachse 18 versetzbar ist, um das Werkstück 14 unterschiedlichen Werkzeugen zuordnen zu können, die an der Werkzeugmaschinenanordnung 10 montiert sind.

Vorliegend beinhaltet die Werkzeugmaschinenanordnung 10 beispielsweise ein Spanwerkzeug 24, das eine definierte geometrische Schneide besitzt und beispielsweise als Bohrer, als Drehwerkzeug oder Ähnliches ausgebildet sein kann. Vorliegend ist das Spanwerkzeug 24 dazu ausgebildet, an einem Werkstückrohling 14 die Bohrung vorzusehen, die die zylindrische Werkstückfläche 16 bildet.

Die Werkzeugmaschinenanordnung 10 beinhaltet vorliegend ferner ein Feinbearbeitungswerkzeug 26, das beispielsweise als Honwerkzeug ausgebildet sein kann. Das Feinbearbeitungswerkzeug 26 ist einteilig ausgebildet, und zwar im Wesentlichen dornförmig mit einer am Außenumfang ausgebildeten Werkzeugbeschichtung 28, die beispielsweise diamantbasiert, CBN-basiert oder Ähnliches sein kann.

Das Feinbearbeitungswerkzeug 26 weist in Längsrichtung gesehen ein erstes Werkzeugende 30 auf, im Bereich dessen das Feinbearbeitungswerkzeug 26 eingespannt werden kann. Ferner weist das Feinbearbeitungswerkzeug 26 ein gegenüberliegendes axiales zweites Werkzeugende 32 auf. Das Feinbearbeitungswerkzeug 26 erstreckt sich von der Einspannung im Bereich des ersten Werkzeugende 30 entlang einer Längsachse, die vorliegend mit der Längsachse 18 des Werkzeuges 14 zusammenfällt.

In diesem vorstehenden Bereich weist das Feinbearbeitungswerkzeug 26 einen Konusabschnitt 34 auf, der sich ausgehend von dem zweiten Werkzeugende 32 konisch erweitert, und zwar unter einem Konuswinkel 36, der beispielsweise in einem Bereich von 0,003° bis 0,05 liegen kann. Im Bereich des zweiten Werkzeugendes 32 weist der Konusabschnitt 34 einen ersten Durchmesser D₁ auf, der größer ist als 0.

Der von der Einspannung vorstehende Abschnitt des Feinbearbeitungswerkzeuges 26 weist ferner einen Schaftabschnitt 38 auf, der an dem Konusabschnitt 34 anschließt und der einen einheitlichen zweiten Durchmesser D₂ besitzt. Eine Differenz zwischen dem Durchmesser D₂ und dem Durchmesser D₁ liegt vorzugsweise in einem Bereich von 0,5 mm bis 0,005 mm..

Das Feinbearbeitungswerkzeug 26 ist mittels eines Linearantriebs 40 in axialer Richtung bewegbar. Ein schematisch angedeuteter Axialkraftsensor 42 ist dazu ausgebildet, eine Axialkraft F_{P} zu messen, die eine Relativkraft zwischen dem Werkzeug 26 und dem Werkstück 14 darstellt. Ferner ist ein Drehmomentsensor 44 vorgesehen, mittels dessen ein relatives Drehmoment T_{P} zwischen dem Werkzeug 26 und dem Werkstück 14 messbar ist.

Der Konusabschnitt 34 weist eine erste axiale Länge L₁ auf. Der Schaftabschnitt 38 weist eine zweite Länge L₂ auf. Das Verhältnis von L₁ zu L₂ liegt vorzugsweise in einem Bereich von 10:1 bis 1:2, insbesondere von 3:1 bis 1:1, vorzugsweise in einem Bereich von 2,5:1 bis 1,25:1.

Das Spanwerkzeug 24 weist einen Durchmesser D₄ auf, um an dem Werkstück 14 eine Bohrung mit einem Durchmesser D₃ zu erzeugen. Der Wert von D₃, der auch als Rohdurchmesser bezeichnet werden kann, ist vorzugsweise kleiner als der Wert von D₂.

Wenn das Feinbearbeitungswerkzeug 26 erstmalig in die Bohrung eingeführt wird, kommt die Ringkante 17 in Anlage an den Konusabschnitt 34. Die axiale Länge L₁ des Konusabschnitts 34 ist gemäß Fig. 1 aufgeteilt in drei axiale Längen L_{F1}, L_{OK}, L_{F2}. L_{F1} grenzt an an das zweite Werkzeugende 32. L_{F2} grenzt an den Schaftabschnitt 38. Der Abschnitt L_{OK} liegt zwischen den Abschnitten L_{F1} und L_{F2}.

Wenn bei dem erstmaligen Kontakt die Ringkante 17 in dem Bereich L_{OK} in Anlage an den Konusabschnitt 34 gelangt, ist die Bohrung mit einem richtigen Durchmesser D₃ hergestellt worden. Wenn die Ringkante 17 innerhalb des Bereiches L_{F1} in Anlage an den Konusabschnitt 34 gelangt, ist der Durchmesser D₃ zu klein, so dass das Werkstück 14 nicht in Ordnung ist und nicht bearbeitet werden kann. Wenn die Ringkante 17 im Bereich des Abschnittes L_{F2} in Anlage an den Konusabschnitt 34 gelangt, ist der Durchmesser D₃ zu groß, und das Werkstück 14 wird vorzugsweise als Ausschuss ausgesondert.

Bei Werkstücken 14, die nach der obigen Definition in Ordnung sind, kann gemessen werden, an welcher Stelle des Bereiches L_{OK} die Ringkante 17 in Anlage an den Konusabschnitt 34 gelangt.

Dieser Wert kann zu mehreren Zwecken ausgewertet werden. Zum einen kann ggf. eine Meldung erfolgen, dass nachfolgende Werkstücke mit einer etwas größeren oder einer etwas kleineren Bohrung bereitgestellt werden, um im Idealfall in der Mitte des Bereiches L_{OK} einen Erstkontakt zu erlangen. Ferner kann diese Information dahingehend ausgewertet werden, dass das Feinbearbeitungswerkzeug 26 möglicherweise hinsichtlich seiner Werkzeugbeschichtung 28 eine gewisse Abnutzung erfahren hat, so dass diese Information auch zur Überwachung der Werkzeugqualität des Feinbearbeitungswerkzeuges 26 verwendet werden kann.

Mittels des Linearantriebs 40 kann das Feinbearbeitungswerkzeug 26 in einer Vorschubrichtung v_{F} bewegt werden, also in Richtung auf das Werkstück 14 zu. Mittels des Linearantriebs 40 kann das Feinbearbeitungswerkzeug 26 auch in der entgegengesetzten Richtung bewegt werden, wie es in Fig. 1 durch einen Rückhub v_{R} angedeutet ist.

Ein Verfahren zur Feinbearbeitung der zylindrischen Werkstückfläche 16 des Werkstückes 14 bzw. Werkstückrohlings 14 mittels des Feinbearbeitungswerkzeuges 26 beinhaltet vorzugsweise die folgenden Schritte: zum einen wird eine Relativrotation zwischen dem Werkzeug 26 und dem Werkstückrohling 14 um die Bearbeitungsachse 18 herum erzeugt, und zwar beispielsweise mittels des Rotationsantriebes 20 der Spanneinrichtung 12 oder mittels eines Rotationsantriebes für das Werkzeug. Ferner wird eine relative Vorschubgeschwindigkeit v_{F} zwischen dem Werkzeug 26 und dem Werkstückrohling 14 entlang der Längs- bzw. Bearbeitungsachse 18 erzeugt. Dies erfolgt vorzugsweise mittels des Linearantriebs 40, kann jedoch auch durch den Axialantrieb 22 erfolgen oder durch eine Kombination hiervon.

Ferner wird ein Istwert einer Prozessgröße erfasst, die eine Funktion einer Relativkraft zwischen dem Werkzeug 26 und dem Werkstückrohling 14 ist und die eine Vielzahl von Prozessgrößenwerten annehmen kann. Die Prozessgröße kann beispielsweise das relative Drehmoment T_{P} sein, kann jedoch auch die axiale Relativkraft F_{P} sein. Ferner kann die Prozessgröße beispielsweise ein elektrischer Motorstrom eines elektrischen Antriebsmotors des Linearantriebs 40 sein, oder ein pneumatischer Druck, sofern der Linearantrieb 40 beispielsweise über eine Pneumatikanordnung auf das Feinbearbeitungswerkzeug 26 wirkt.

Bei der Feinbearbeitung erfolgt dann ein Erstkontakt zwischen dem Konusabschnitt 34 und der Ringkante 17. Anschließend wird weiterhin die relative Vorschubgeschwindigkeit eingestellt und die zylindrische Werkstückfläche 16 wird dadurch feinbearbeitet. Dabei wird die Prozessgröße T_{P}; F_{P} stetig geregelt, und zwar durch Verändern der relativen Vorschubgeschwindigkeit v_{F}, derart, dass die relative Vorschubgeschwindigkeit sich um so mehr ändert, je mehr ein Istwert der Prozessgröße T_{P}; F_{P} von einem Sollwert dieser Prozessgröße abweicht.

Mit anderen Worten erfolgt der Vorschub in Abhängigkeit von der Erfassung der Prozessgröße, wobei das stetige Regeln dieser Prozessgröße vorzugsweise durch einen Proportionalregler erfolgt.

In dem Prozess gelangt irgendwann der Schaftabschnitt 38 in die Bohrung des Werkstückes 14. Hierbei wird der obige Prozess fortgeführt. Anschließend kann ein Rückhub erfolgen. Auch während des Prozesses kann ggf. ein einzelner Rückhub oder es können mehrere Rückhube bedarfsweise durchgeführt werden, insbesondere dann, wenn die axiale Länge der zylindrischen Werkstückfläche 16 lang ist, um auf diese Weise Späne auszuräumen.

Der Vorschubbewegung v_{F} wird eine Oszillationsbewegung überlagert, die in Fig. 1 schematisch bei v₀ angedeutet ist. Die Oszillationsbewegung hat eine Frequenz in einem Bereich von 30 Hz bis 100 Hz und vorzugswese eine Amplitude in einem Bereich von 0,5 mm bis 4 mm. Das Durchführen eines Feinbearbeitungsprozesses, insbesondere eines Honprozesses, erfolgt unter Verwendung eines Feinbearbeitungswerkzeuges, wie es oben und nachstehend beschrieben ist. Die relative Bewegung zwischen dem Werkzeug und dem Werkstück wird dabei hinsichtlich der Vorschubgeschwindigkeit geregelt, wie oben ausgeführt. Die zusätzliche Oszillationsbewegung wird aufgrund der Massenträgheit des Werkzeuges und der Werkzeug-Spindel sowie eines Auslenkschlittens vorteilhaft mittels des Werkstückes realisiert. Die relativ kleine bewegte Masse ermöglicht dabei die oben genannten Oszillationsfrequenzen, ohne dass die Maschine zu große Schwingungen in die Umgebung abgibt. Eine axiale Auslenkung muss während der Bearbeitung mit der Oszillation versteift werden. Beispielsweise kann eine axiale Vorspannkraft erhöht werden.

Es versteht sich, dass der Prozess vorzugsweise unter Hinzugabe einer geeigneten Schmierflüssigkeit durchgeführt werden kann, beispielsweise ein Honöl oder dergleichen.

Nachfolgend werden weitere Ausführungsformen von Werkzeugmaschinen bzw. von Feinbearbeitungsmodulen für Werkzeugmaschinen beschrieben, die sämtlich auf dem oben beschriebenen Verfahren beruhen. Generell ist der Aufbau und die Konstruktion sowie die Funktion der nachstehend beschriebenen Werkzeugmaschinen bzw. Feinbearbeitungsmodule daher als identisch anzusehen zu den oben beschriebenen Merkmalen. Gleiche Elemente sind daher mit gleichen Bezugszeichen gekennzeichnet. Im Folgenden werden im Wesentlichen die Unterschiede erläutert.

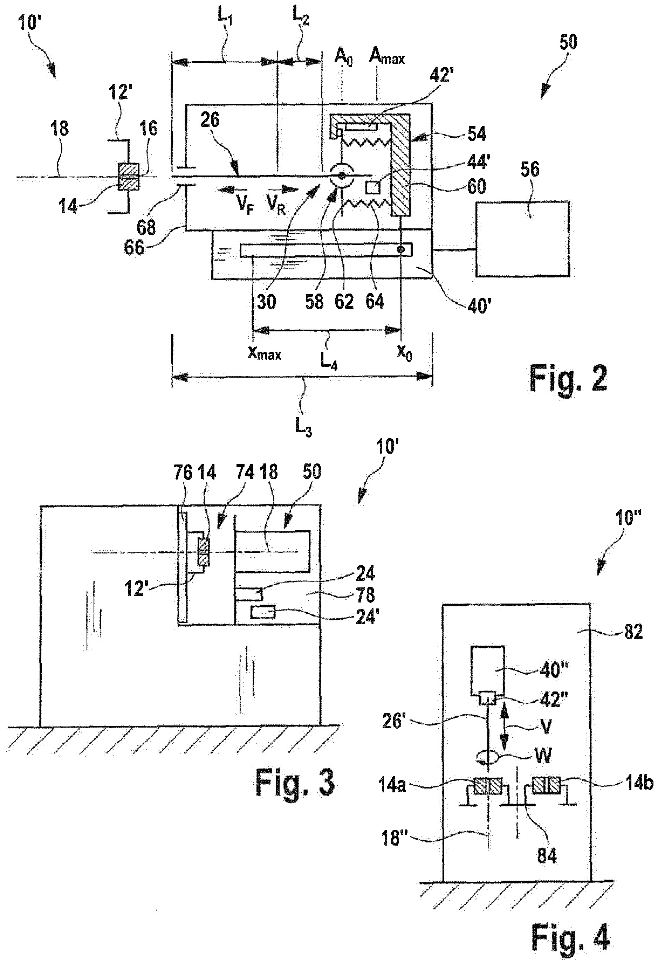

In Fig. 2 ist ein Feinbearbeitungsmodul 50 für eine Werkzeugmaschinenanordnung 10' schematisch dargestellt.

Das Feinbearbeitungsmodul 50 beinhaltet ein Modulgehäuse 52, das eine axiale Länge L₃ aufweist. Innerhalb des Modulgehäuses 52 ist ein Schlitten 54 in axialer Richtung zwischen einer Position x₀ und einer Position x_{MAX} bewegbar, und zwar mittels eines Linearantriebs 40', der in Fig. 2 schematisch angedeutet ist.

Wie auch bei den vorherigen Ausführungsformen kann der Linearantrieb 40' realisiert sein durch einen Elektromotor in Verbindung mit einem Rotations/Translations-Wandler, durch einen elektrischen Linearmotor oder dergleichen.

Ferner beinhaltet das Feinbearbeitungsmodul 50 eine Steuereinrichtung 56, die an dem Modulgehäuse 52 anschließbar ist und beispielsweise als Steuerterminal zur Anordnung neben der Werkzeugmaschinenanordnung 10' ausgebildet sein kann.

Das Feinbearbeitungswerkzeug 26 ist im Bereich seines ersten Werkzeugendes 30 an dem Schlitten 54 gelagert, und zwar mittels einer Kardanlagerung 58.

Der Schlitten 54 beinhaltet eine Schlittenbasis 60, die mit einem Antriebsglied des Linearantriebs 40' gekoppelt ist, sowie einen Schieber 62. Der Schieber 62 ist mit der Schlittenbasis 60 über eine Axialfederanordnung 64 gekoppelt. Das erste Werkzeugende 30 des Feinbearbeitungswerkzeuges 26 ist an dem Schieber 62 gelagert. Der Axialkraftsensor 42' ist dazu ausgebildet, eine Relativverschiebung zwischen der Schlittenbasis 60 und dem Schieber 62 zu erfassen. Ferner ist ein Drehmomentsensor 44' vorgesehen, der eine Relativverdrehung zwischen dem Feinbearbeitungswerkzeug 26 (oder einer starr damit verbundenen Spanneinrichtung) und dem Schlitten 54 bzw. dem Modulgehäuse 52 erfassen kann.

In Fig. 2 ist angedeutet, dass sich die Relativposition zwischen der Schlittenbasis 60 und dem Schieber 62 in einem Bereich zwischen A₀ und A_{MAX} bewegen kann.

Das Modulgehäuse 52 weist eine Gehäusewand 66 auf, an der eine Werkzeugführung 68 ausgebildet ist. Die Werkzeugführung 68 ist dazu ausgebildet, das zweite Werkzeugende 32 des Feinbearbeitungswerkzeuges 26 zu führen, insbesondere konzentrisch zu der Bearbeitungsachse 18. In die Werkzeugführung 68 kann eine Zuführung für Prozessfluid integriert sein.

In der Nullposition x₀ des Schlittens 54 befindet sich dieser im Bereich von einem axialen Ende des Modulgehäuses 52, und zwar von jenem axialen Ende, das der Gehäusewand 66 axial gegenüberliegt. Das Feinbearbeitungswerkzeug 26 erstreckt sich in dieser Position im Wesentlichen innerhalb des Modulgehäuses, wobei das zweite axiale Werkzeugende 32 sich bis hin zu der Werkzeugführung 68 erstreckt.

Der maximale Hub zwischen der Position x₀ und der maximalen Auslenkung x_{MAX} des Schlittens 54 ist in Fig. 2 bei L₄ angedeutet. Dieser Hub L₄ ist so groß, dass das Feinbearbeitungswerkzeug 26 sich sowohl mit dem Konusabschnitt 34 als auch mit dem Schaftabschnitt 38 (mit den Längen L₁ und L₂) aus dem Modulgehäuse 52 heraus erstrecken kann, um eine Bearbeitung an einem Werkstück 14 vorzunehmen, das außerhalb des Modulgehäuses 52 angeordnet ist, und zwar vorzugsweise eingespannt mittels einer Spanneinrichtung 12' der Werkzeugmaschinenanordnung 10'.

Der Linearantrieb 40 ist in axialer Überlappung mit dem Modulgehäuse 52 bzw. in axialer Überlappung mit dem Feinbearbeitungswerkzeug 26 angeordnet. Der Linearantrieb 40 kann in das Modulgehäuse 52 integriert sein. Ein Verhältnis zwischen der axialen Modullänge L₃ und dem maximalen Fahrweg (Hub) L₄ des Schlittens 54 liegt vorzugweise in einem Bereich von 1,3:1 bis 2,5:1, vorzugsweise in einem Bereich von 1,4:1 bis 2,2:1.

Das Feinbearbeitungsmodul 50 kann folglich in axialer Richtung kompakt realisiert sein.

In Fig. 3 ist eine beispielhafte Werkzeugmaschinenanordnung 10' gezeigt, die eine Spanneinrichtung 12' beinhaltet, die um eine Bearbeitungsachse bzw. Längsachse herum drehbar ist und dazu ausgerichtet ist, ein Werkstück 14 einzuspannen.

Die Werkzeugmaschine kann insbesondere als Drehmaschine ausgebildet sein und weist einen Bearbeitungsraum 74 auf, der mittels einer Tür 76 verschließbar ist, wie es in Fig. 3 durch einen Pfeil angedeutet ist.

Innerhalb des Bearbeitungsraumes 74 ist eine Werkzeugmontagestelle 78 ausgebildet, an der beispielsweise unterschiedliche Spanwerkzeuge 24, 24' festgelegt sein können. Ferner kann an der Werkzeugmontagestelle 78 das Feinbearbeitungsmodul 50 der Fig. 2 festgelegt sein. In Fig. 3 ist dargestellt, dass die Längsachse 18 des Feinbearbeitungsmoduls 50 mit der Bearbeitungsachse 18 der Werkzeugmaschinenanordnung ausgerichtet ist. Folglich kann in dieser Relativposition eine Feinbearbeitung des eingespannten Werkstückes 14 erfolgen.

Die Spanneinrichtung 12' kann in manchen Ausführungsformen auch quer zu der Achse 18 versetzt werden, um an dem Werkstück 14 Bearbeitungen mittels anderer spanender Werkzeuge 24, 24' durchführen zu können.

In Fig. 2 ist ferner angedeutet, dass die Steuereinrichtung 56 des Feinbearbeitungsmoduls 50 außerhalb eines nicht näher bezeichneten Gehäuses der Werkzeugmaschinenanordnung 10' angeordnet sein kann und über einen nicht näher dargestellten Kabelstrang mit dem Feinbearbeitungsmodul 50 verbunden sein kann.

Das Modul 50 ist dabei als Austauschmodul bzw. als Zusatzmodul für die Werkzeugmaschinenanordnung 10' ausgebildet und kann unabhängig von der Werkzeugmaschinenanordnung 10' betrieben werden. Zur Initiierung eines Feinbearbeitungsprozesses mittels des Feinbearbeitungsmoduls 50 wird ein Werkstück 14 mit einer zylindrischen Bohrung in der Spanneinrichtung 12' eingespannt und in Ausrichtung mit der Achse des Feinbearbeitungsmoduls 50 gebracht, wie es in Fig. 3 dargestellt ist. Anschließend wird vor der Initiierung des Feinbearbeitungsprozesses das Werkstück 14 mittels eines nicht näher dargestellten Rotationsantriebes 20 in Drehung versetzt. Die Drehzahl kann in einem Bereich zwischen 500 Umdrehungen/Minute bis 10000 Umdrehungen/ Minute liegen, und vorzugsweise in einem Bereich höher als 5000 Umdrehungen/Minute.

Die Drehzahl n_{W} des Werkstückes 14 wird vorzugsweise auf eine konstante Drehzahl geregelt. Sobald die Drehzahl eingerichtet ist, kann der Feinbearbeitungsprozess starten, wobei der Schlitten 54 mit einer relativen Vorschubgeschwindigkeit in Richtung hin zu dem Werkstück 14 bewegt wird, derart, dass der Konusabschnitt durch die Werkzeugführung 68 hindurch in die Bohrung des Werkstückes 14 eingeführt wird, bis die Ringkante 17 (siehe Fig. 1) in Anlage an den Konusabschnitt 34 gelangt.

Hierbei wird die relative Vorschubgeschwindigkeit v_{F} auf einen bevorzugten Wert eingestellt. Ferner wird ein Istwert einer Prozessgröße T_{P} oder F_{P} erfasst. Für die Prozessgröße wird ein bestimmter Sollwert vorgegeben. Die Prozessgröße wird anschließend stetig, insbesondere proportional geregelt, und zwar durch Verändern der relativen Vorschubgeschwindigkeit v_{F}, derart, dass die relative Vorschubgeschwindigkeit v_{F} sich um so mehr ändert, je mehr ein Istwert der Prozessgröße von einem Sollwert der Prozessgröße abweicht.

Dabei wird vorzugsweise eine Differenz zwischen dem Sollwert der Prozessgröße und dem Istwert der Prozessgröße in einen Regler eingegeben, wie einen P-Regler, einen PI-Regler oder einen PID-Regler, wobei dieser Regler eine Stellgröße ausgibt, die einen Antriebsmotor des Linearantriebs 40' zum Erzeugen der Vorschubgeschwindigkeit v_{F} ansteuert.

Hierdurch dringt das Feinbearbeitungswerkzeug 26 immer tiefer in die Bohrung ein, bis es mit dem zweiten Ende 32 aus der Stirnseite austritt, die der Ringkante 17 gegenüberliegt. Über den Schaftabschnitt 38 kann der Bohrungsdurchmesser dabei auf ein gewünschtes Sollmaß gefertigt werden.

Formfehler einer mittels eines Spanwerkzeuges 24 hergestellten Bohrung, beispielsweise Unrundheiten, Vorweiten, Welligkeiten, Konizitäten oder Bananenformen, können durch diesen Feinbearbeitungsprozess verringert oder vollständig eliminiert werden. Es können Maßhaltigkeiten von wenigen Mikrometern erreicht werden.

Der Prozess ist stabil und kraftkontrolliert, mit minimaler Streuung von Form, Oberfläche und Maß. Das System kann zudem relativ einfach realisiert werden, da weder die Form noch das Durchmesser-Maß durch Messen oder Regeln eingestellt oder erhalten werden müssen. Das Endmaß der Bohrung ergibt sich vielmehr durch den Durchmesser D₂ des Schaftabschnittes 38.

Durch die Kardanlagerung 58 kann das Feinbearbeitungswerkzeug 26 sich dabei zwischen der Einspannung und der Werkzeugführung 68 leicht aufbiegen, so dass sich in axialer Richtung eine gewisse Elastizität ergibt. Die Kardanlagerung 58 hat insbesondere die folgenden Aufgaben: zum einen ein Ausgleich der Lage und von Winkelfehlern zwischen Werkzeugmaschine und Feinbearbeitungsmodul. Zum anderen der Ausgleich von Toleranzen der Bewegung des Feinbearbeitungsmoduls, ferner der Ausgleich der Lage und von Winkelfehlern von Toleranzen der eigenen Geradheit des Feinbearbeitungswerkzeuges 26 und von Krümmungen des Feinbearbeitungswerkzeuges 26 aufgrund einer axialen Last.

Ferner kann dem Schlitten 54 ein Axial-Anschlagsensor zugeordnet sein, der beispielsweise erfasst, wenn das Feinbearbeitungswerkzeug 26 sich trotz seiner vorgegebenen Vorschubgeschwindigkeit v_{F} axial nicht mehr bewegt. Dieser Axial-Anschlagsensor kann beispielsweise einer maximalen Auslenkung A_{MAX} des Schiebers 62 in Bezug auf die Schlittenbasis 60 entsprechen. Der Axial-Anschlagsensor kann typischerweise auf einer indirekten oder einer direkten analogen Kraftmessung basieren. Beispielsweise kann der Axial-Anschlagsensor dabei über eine Feder oder einen Druckluftkolben vorgespannt sein, so dass der Axial-Anschlagsensor typischerweise kurz vor Erreichen der maximalen Auslenkung schaltet, und zwar nahe bei A₀, so dass der Rest des Weges bis A_{MAX} als "Knautschzone" dienen kann, bis der Vorschub gestoppt hat.

In einer bevorzugten Ausführungsform arbeitet der Drehmomentsensor 44' als quasianaloger Sensor, der eine Vielzahl von Drehmomentwerten erfassen kann. Der Axialkraftsensor 42' kann hingegen als der oben beschriebene Axial-Anschlagsensor ausgebildet sein. In anderen Ausführungsformen kann als Prozessgröße nicht das Drehmoment T_{P} herangezogen werden, sondern alternativ eine Axialkraft F_{P}. Ferner kann die Prozessgrö-ße durch eine Kombination dieser Größen gebildet sein.

Sobald der Feinbearbeitungsprozess beendet ist, kann die Steuervorrichtung 56 ein Fertig-Signal an die Steuerung der Werkzeugmaschine übergeben, die dann die Rotation der Spanneinrichtung 12' beenden kann, um das auf diese Weise fertiggestellte und feinbearbeitete Werkstück 14 entnehmen zu können.

In Fig. 4 ist eine alternative Ausführungsform einer Werkzeugmaschinenanordnung 10" gezeigt, bei der die Werkzeugmaschinenanordnung 10" insgesamt als Feinbearbeitungsmaschine ausgebildet ist. Hierbei ist ein Feinbearbeitungswerkzeug 26' mittels eines Linearantriebs 40" und eines Rotationsantriebes 20" in Vorschubrichtung versetzbar und in Drehrichtung antreibbar, wie es in Fig. 4 bei v bzw. n angedeutet ist. Gegebenenfalls kann die Werkzeugmaschinenanordnung 10" dazu ausgebildet sein, den Schnellhub bis in eine Einfahrposition durch eine Bewegung des jeweiligen zu bearbeitenden Werkstückes realisiert werden.

In einer derartigen Werkzeugmaschine können eine Mehrzahl von Werkstücken 14a, 14b beispielsweise auf einer Werkstückaufnahme 84 angeordnet werden, die innerhalb eines Werkzeugmaschinengehäuses 82 angeordnet ist.

Die Werkstückaufnahme 84 kann als Drehteller ausgebildet sein, um jeweils ein Werkstück 14a, 14b in Ausrichtung mit einer Längsachse 18" des Feinbearbeitungswerkzeuges 26' zu bringen, wobei die Achse 18" bei dieser Ausführungsform vorzugsweise vertikal ausgerichtet ist.

Hierbei ist es ggf. auch nicht mehr nötig, eine Kardanlagerung 58 vorzusehen. Ob eine Kardanlagerung sinnvoll ist oder nicht, richtet sich insbesondere nach dem Durchmesser des Werkzeuges und der Einspannlänge. Nach Möglichkeit kann auch das Werkstück kardanisch gelagert sein.

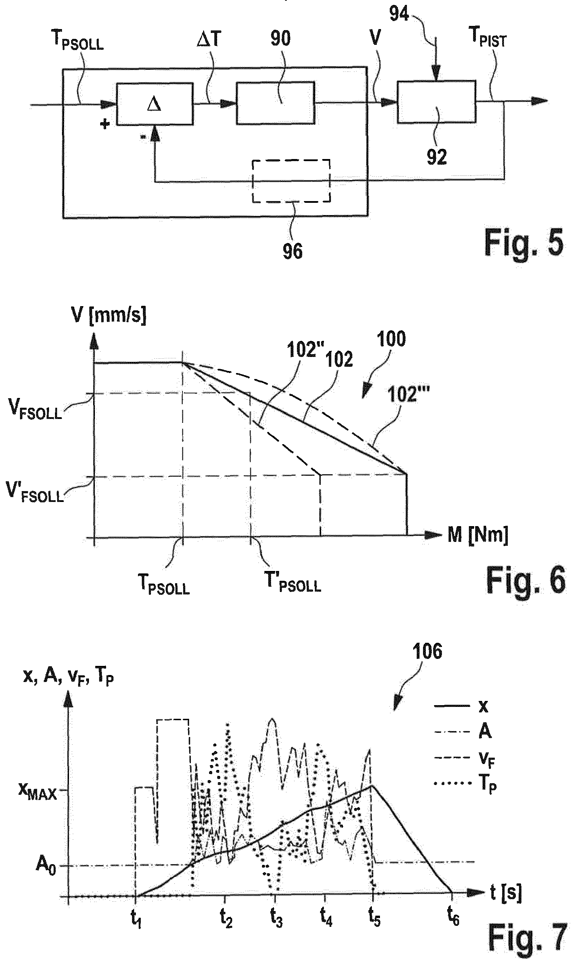

In Fig. 5 ist in schematischer Form ein Regelkreis dargestellt, der einen Stetigregler wie einen Proportionalregler 90 beinhaltet.

Der Regelkreis ist dazu ausgelegt, als Prozessgröße das relative Drehmoment T_{P} zwischen dem Werkzeug 26 und dem Werkstück 14 zu regeln. Der Prozess wird durch die Regelstrecke 92 repräsentiert. Auf die Regelstrecke 92 wirkt wenigstens eine Störgrö-ße 94. Es ergibt sich ein Istwert T_{PIST} des relativen Drehmomentes, der mittels des Drehmomentsensors 44 erfassbar ist.

Für den Prozess wird ferner ein Soll-Drehmoment T_{PSOLL} vorgegeben. In einem Differenzbildner Δ wird die Differenz zwischen dem Ist-Drehmoment T_{PIST} und dem Soll-Drehmoment T_{PSOLL} gebildet und als Differenzwert bzw. Regelabweichung ΔT in den Regler 90 eingegeben. Der Regler erzeugt hieraus eine Stellgröße, bei der es sich vorliegend um die relative Vorschubgeschwindigkeit v handelt. Mit dieser wird die Regelstrecke 92 beaufschlagt, wodurch dann mittelbar das Ist-Drehmoment T_{PIST} beeinflusst wird.

In der Rückführung von dem Ist-Drehmoment zu dem Differenzbildner kann ggf. ein Messwandler 96 vorgesehen sein, um eine andere ggf. erfassbare Prozessgröße rückzuführen und in einen entsprechenden Drehmomentwert umzuwandeln. Der Messwandler 96 kann beispielsweise eine Ausgabe eines Drehmomentsensors in Form eines Weges oder einer Federkraft in einen Drehmomentwert umsetzen.

Fig. 6 zeigt ein Diagramm 100 einer Regelcharakteristik von Stellgröße v über dem Drehmoment T.

Die Regelcharakteristik beinhaltet einen geradlinigen Abschnitt mit konstanter Vorschubgeschwindigkeit v bei v_{FSOLL}, der für ein Drehmoment T von 0 bis zu einem Soll-Drehmoment T_{PSOLL} vorgegeben ist. Bei diesem Wertepaar T_{PSOLL} v_{FSOLL} soll der Feinbearbeitungsprozess durchgeführt werden.

Sofern das Drehmoment T über diesen Wert ansteigt, wird die Vorschubgeschwindigkeit v verringert, und zwar proportional wie es durch den linearen Abschnitt der linearen Kennlinie 102 angedeutet ist.

Oberhalb eines maximalen Drehmomentes T_{MAX} wird die Vorschubgeschwindigkeit sofort auf 0 heruntergesetzt. Dies kann beispielsweise dann sein, wenn ein Axialanschlagsensor (beispielsweise 42' in Fig. 2) ein Signal ausgibt. Nach dem Verringern der Vorschubgeschwindigkeit v auf 0 kann anschließend ein Rückhub eingeleitet werden, was in Fig. 6 jedoch nicht näher dargestellt ist. Dies erfolgt in der Regel auch nicht im Rahmen der Regelung der Fig. 5.

In Fig. 6 ist gestrichelt dargestellt, dass die Steigung der Kennlinie 102 veränderbar ist. Eine steilere Kennlinie 102" bedeutet einen höheren Proportional-Wert des ProportionalReglers 90. Dieser spricht dann schneller auf Änderungen an, ggf. kann die Stabilität hierdurch etwas verringert werden.

Die Steigung der linearen Wegestrecke 102, 102" kann in geeigneter Weise angepasst werden, ggf. auch während des Betriebes.

Bei 102‴ ist ferner gezeigt, dass die Kennlinie nicht rein linear sein muss, sondern auch gebogen ausgeführt sein kann, um für unterschiedliche Regelabweichungen von dem Sollwert T_{PSOLL} unterschiedliche Steigungen der Kennlinie 102 bzw. Proportionalwerte zu erzielen.

Ferner ist in Fig. 6 gezeigt, dass der Arbeitspunkt nicht notwendigerweise am Ende der linearen Kennlinie 102 liegen muss, sondern auch auf der Kennlinie liegen kann, wie es in Fig. 6 bei T_{PSOLL'}, v_{FSOLL'} angedeutet ist. In diesem Fall kann für den Fall, dass ein Soll-Drehmoment unterschritten wird, die Vorschubgeschwindigkeit ggf. noch erhöht werden.

Fig. 7 zeigt ein Zeitablaufdiagramm 106 für einen Feinbearbeitungsprozess der erfindungsgemäßen Art.

In Fig. 7 sind über der Zeit t aufgetragen: die Position x des Schlittens, die axiale Auslenkkraft A des Schiebers 62 gegenüber der Schlittenbasis 60, die Vorschubgeschwindigkeit v_{F} sowie das Drehmoment T_{P}.

Der Schieber 62 ist gegenüber der Schlittenbasis 60 immer leicht vorgespannt, so dass die Axialfederanordnung 64 der Fig. 2 immer in einer gewissen Vorspannung ist. Dadurch ist zum Zeitpunkt 0 die Auslenkkraft A₀ größer als 0.

Zum Zeitpunkt t₁ wird die Vorschubgeschwindigkeit v_{F} erhöht, und zwar auf einen relativ niedrigen Wert, bis eine Einfahrposition erreicht ist (zwischen t₁ und t₂). Anschließend wird die Vorschubgeschwindigkeit v_{F} darüber hinaus erhöht, so dass das Feinbearbeitungswerkzeug 26 sich schnell dem Werkstück 14 nähert. Dabei ist das Drehmoment T_{P} gleich Null.

Zum Zeitpunkt t₂ kontaktiert das Feinbearbeitungswerkzeug 26 das Werkstück 14, so dass das Drehmoment T_{P} ansteigt. Dies führt ebenfalls zu einer gewissen Auslenkung A, wobei der Schieber 62 auf die Schlittenbasis 60 zu gedrückt wird. Ferner verringert sich hierdurch die Vorschubgeschwindigkeit v_{F}.

Sobald das Drehmoment T_{P} das Soll-Drehmoment überschritten hat, wird die Vorschubgeschwindigkeit v_{F} entsprechend verringert.

Beispielsweise kann jedoch das Drehmoment T_{P} durch eine Verringerung der Vorschubgeschwindigkeit V_{F} stark absinken, wonach diese wiederum erhöht wird, wie es ab t₃ gezeigt ist.

Bei t₄ ist es umgekehrt. Hier ergibt sich ein relativ hohes Drehmoment T_{P}, wodurch die Vorschubgeschwindigkeit v_{F} abgesenkt wird.

Aufgrund der Eigenschaft des Proportionalreglers erfolgt dies quasi gleichzeitig, so dass eine sehr gute Regelung erreichbar ist.

Zum Zeitpunkt t₅ ist der maximale Wert x_{MAX} oder ein Wert kurz davor erreicht. Hierbei ist bereits der Schaftabschnitt 38 in Kontakt gekommen mit der zylindrischen Werkstückfläche 16. Zum Zeitpunkt t₅ erfolgt daher ein Rückhub bis hin zum Zeitpunkt t₆, wodurch wieder die Ausgangsposition erreicht ist, also der Schlitten wieder am Punkt x₀ angekommen ist.

Man erkennt, dass der Vorschub des Feinbearbeitungswerkzeugs 26 in das Werkstück 14 hinein und durch dieses hindurch kontinuierlich erfolgt, also kein Rückhub erforderlich ist, bis der Maximalwert x_{MAX} erreicht ist.

Im Gegensatz zu bekannten Verfahren kann hierdurch die Bearbeitungsgeschwindigkeit signifikant erhöht werden.

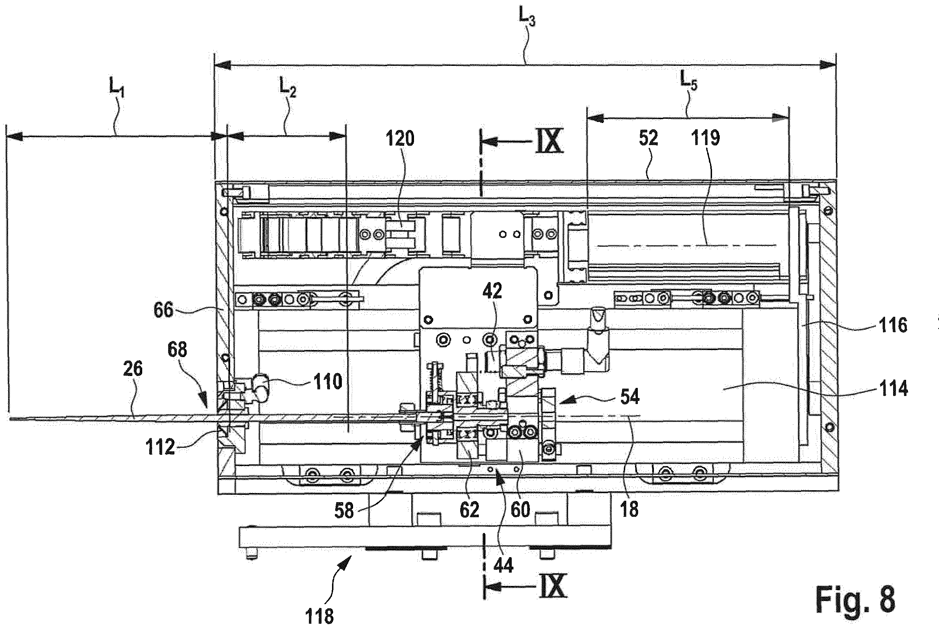

In den Fig. 8 bis 10 ist eine weitere Ausführungsform eines Feinbearbeitungsmoduls 50 gezeigt, das hinsichtlich Aufbau und Funktionsweise generell dem Feinbearbeitungsmodul 50 der Fig. 2 entspricht. Gleiche Elemente sind daher durch gleiche Bezugszeichen gekennzeichnet. Im Folgenden werden im Wesentlichen die Unterschiede erläutert.

Zum einen ist zu erkennen, dass die Werkzeugführung 68 eine Kühlmittelzufuhr 110 beinhalten kann, sowie Kühlmitteldüsen 112, über die das Kühlmittel auf die Oberfläche des durch die Werkzeugführung 68 hindurch geführten Feinbearbeitungswerkzeuges 26 aufgebracht werden kann.

Der Linearantrieb 40 enthält vorliegend eine Linearachse 114, an der der Schlitten 54 geführt ist, sowie ein Zugmittelgetriebe 116. Die Linearachse 114 beinhaltet einen Rotations/Translationswandler und setzt eine Drehbewegung des Zugmittelgetriebes 116 in entsprechende Linearbewegungen des Schlittens 54 um. Das Zugmittelgetriebe 116 ist ferner mit einem Antriebsmotor 119 gekoppelt, der eine Länge L₅ besitzt. Der Antriebsmotor 119 ist als elektrischer Antriebsmotor mit einer angedeuteten Drehachse ausgebildet, über die das Zugmittelgetriebe 116 angetrieben werden kann, so dass Drehbewegungen des Antriebsmotors 119 in die Linearachse 114 eingeleitet werden, um den Schlitten 54 linear zu bewegen.

An der Unterseite des Modulgehäuses 52 kann eine Montageplatte 118 ausgebildet sein, über die das Feinbearbeitungsmodul 50 an einer Werkzeugmontagestelle 78 einer Werkzeugmaschine 10' montierbar ist. Es versteht sich, dass hierbei durch geeignete Nivelierungsmittel eine Ausrichtung der Bearbeitungsachse 18 mit einer Achse der Spanneinrichtung 12' erreichbar sein kann.

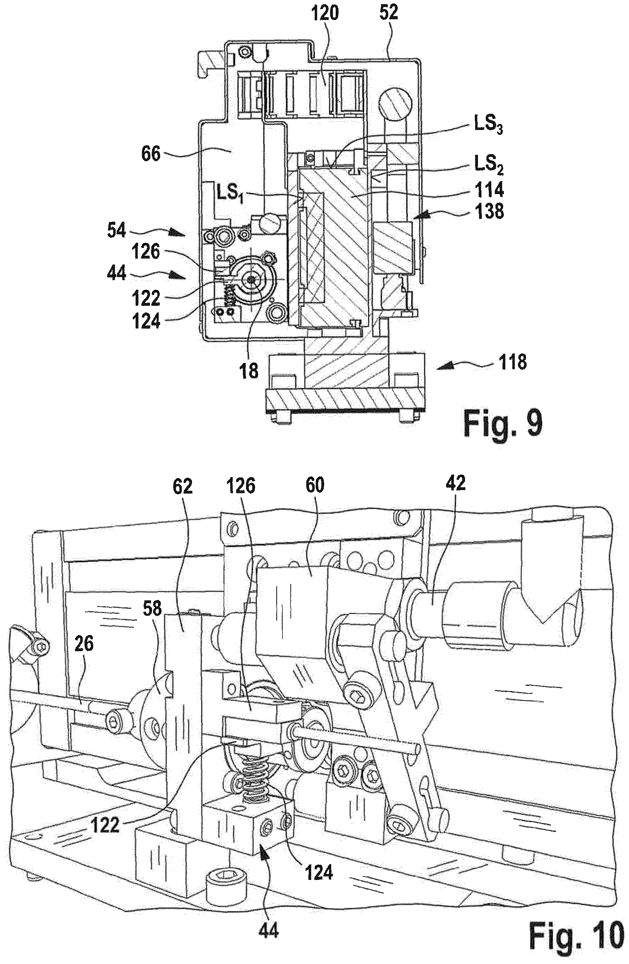

Wie es in Fig. 9 gezeigt ist, ist der Schlitten 54 auf einer Längsseite LS₁ der Linearachse 114 angeordnet. Auf einer benachbarten oberen Längsseite LS₃ ist eine Kabelführung bzw. Kabelkette 120 angeordnet, über die Signale von Sensoren des Schlittens 54 in entsprechenden Signalleitungen geführt werden können.

In Fig. 9 und 10 ist zudem gezeigt, dass der Drehmomentsensor 44 einen Hebel 122 beinhalten kann, der mit einer Spanneinrichtung bzw. einer Kardanlagerung 58 des Feinbearbeitungswerkzeuges 26 in Verbindung steht und radial gegenüber der Bearbeitungsachse 18 vorsteht. Der Hebel 122 ist über eine Feder 124 gegen einen Abstandssensor 126 vorgespannt.

Bei dem Auftreten von Drehmomenten zwischen dem Feinbearbeitungswerkzeug 26 und dem Werkstück 14 wird das Feinbearbeitungswerkzeug 26 in Umfangsrichtung ausgelenkt, wodurch der Hebel 122 sich gegen die Kraft der Feder 124 von dem Abstandssensor 126 weg bewegt. Der Abstandssensor 126 kann also ein dem Drehmoment entsprechendes, insbesondere proportionales Signal liefern.

In Fig. 9 ist gezeigt, dass auf einer der ersten Längsseite LS₁ in Querrichtung gegenüberliegenden Längsseite LS₂ eine Steuereinrichtung 128 angeordnet sein kann, die mit einer stationären, außerhalb des Modulgehäuses 52 angeordneten Steuervorrichtung 56 in Verbindung stehen kann.

Die Kabelführung 120 ist an der dritten Längsseite LS₃ angeordnet.

Alle Bauelemente überschneiden sich in axialer Richtung mit der Linearachse 114. Folglich kann das Feinbearbeitungsmodul 50 axial kompakt realisiert werden.

In Fig. 8 und 10 ist ferner ein Axialkraftsensor 42 zu erkennen, der typischerweise ein analoger indirekter oder direkter Kraftmesssensor ist. Beispielsweise kann der Axialkraftsensor 42 einen Wegsensor beinhalten, der einen Weg des Schiebers 62 erfasst, der in Bezug auf die Schlittenbasis 60 axial vorgespannt ist. Vorliegend kann der Axialkraftsensor 42 dazu als Anschlagsensor ausgebildet sein, um den Wert der maximalen Auslenkung A_{MAX} zu erfassen. Ferner kann ein solcher Anschlagsensor typischerweise nahe bei A₀ schalten, so dass der Rest des Weges bis A_{MAX} als "Knautschzone" genutzt werden kann, bis der Vorschub gestoppt hat.

Es versteht sich ferner, dass an dem Modulgehäuse, insbesondere oberhalb der Linearachse 114, Endschalter für den Schlitten 54 vorgesehen sein können, die in Fig. 8 jedoch nicht näher bezeichnet sind.

Die Kardanlagerung 58 kann eine Gewichtskompensation beinhalten. Zur Prozessabsicherung kann im Bereich der Kardanlagerung ferner ein nicht näher bezeichneter Sensor für eine Überlast vorgesehen sein. Ferner kann ein Verbindungsstück zwischen dem Feinbearbeitungswerkzeug 26 und einer Werkzeugaufnahme der Kardanlagerung 58 als ein Überlast-Opferstück mit einer Sollbruchstelle vorgesehen sein, um für den Fall einer fatalen Fehlfunktion eine Beschädigung des Schlittens oder sonstiger Komponenten des Feinbearbeitungsmoduls 50 ausschließen zu können.

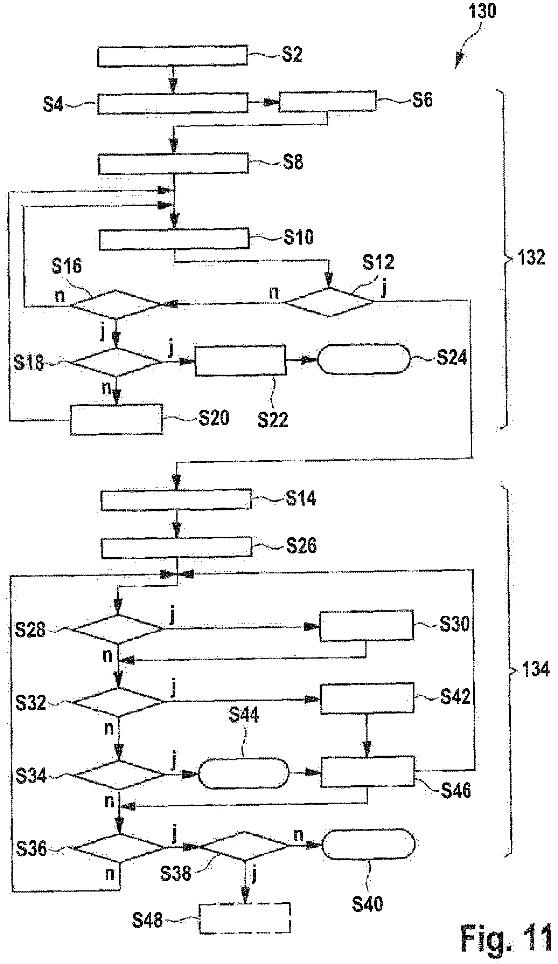

In Fig. 11 ist ein Flussdiagramm 130 dargestellt, das einen Prozess zur Feinbearbeitung einer zylindrischen Werkstückfläche eines Werkstückrohlings mittels eines Feinbearbeitungswerkzeuges darstellt.

Der Prozess beginnt mit einem Einfahrprozess 132, wodurch das Feinbearbeitungswerkzeug 26 bis in einer Position gebracht wird, bei der der Konusabschnitt 34 die Ringkante 17 gerade noch nicht berührt. Im Anschluss daran erfolgt der eigentliche Bearbeitungsprozess 134, wobei die relative Vorschubgeschwindigkeit noch einmal deutlich erhöht wird.

Mit dem Einfahrprozess 132 beginnt der Bearbeitungszyklus, und zwar bei S₂.

Anschließend wird eine axiale Soll-Auslenkungskraft auf "Einfahren" eingestellt. Ferner wird eine Drehzahl des Werkstückes oder des Werkzeuges auf "Einfahren" eingestellt, also auf eine relativ hohe Drehzahl (S₄).

Im Schritt S₆ wird ein Zähler für Rückhube auf "0" gesetzt.

In einem anschließenden Schritt S₈ wird eine relative Vorschubgeschwindigkeit v auf "Einfahren Vorschub" eingestellt.

Im Schritt S₁₀ erfolgt anschließend ein Einfahren des Feinbearbeitungswerkzeuges 26 in das Werkstück 14.

Im Schritt S₁₂ wird abgefragt, ob eine Einfahr-Position kurz vor einer BearbeitungsPosition (d.h. ein Kontakt zwischen Konusabschnitt 34 und Ringkante 17) bereits erreicht ist.

Wenn dies der Fall ist (ja in Schritt S₁₂), geht der Prozess über zum Bearbeitungsprozess 134, bei dem im Schritt S₁₄ zunächst die axiale Auslenkungskraft auf "maximales Bearbeiten" eingestellt wird. Ferner wird die Drehzahl des Werkstückes oder des Werkzeuges auf "Bearbeiten" eingestellt.

Im Schritt S₂₆ wird anschließend die Vorschubgeschwindigkeit auf "maximales Bearbeiten" eingestellt, entsprechend dem Wert v_{FSOLL} in Fig. 6.

Sofern die die Antwort im Schritt S₁₂ nein war, wird in Schritt S₁₆ abgefragt, ob eine axiale Auslenkungskraft oder ein Drehmoment für das "Einfahren" überschritten worden ist. Wenn dies nicht der Fall ist, geht das Verfahren zurück zum Beginn des Schrittes S₁₀. Wenn die Kraft oder das Drehmoment überschritten worden ist, wird im Schritt S₁₈ abgefragt, ob ein Zähler für eine maximale Anzahl von Rückhuben überschritten worden ist.

Wenn dies nicht der Fall ist, wird der Zähler für Rückhube im Schritt S₂₀ inkrementiert und das Verfahren und das Verfahren geht zurück zum Anfang des Schrittes S₁₀. Wenn die maximale Anzahl der Rückhube überschritten worden ist, wird im Schritt S₂₂ ein Zyklus "Abbrechen" durchgeführt. Es erfolgt eine Fehlermeldung "Einfahren nicht möglich" und der Schlitten 54 wird zurück auf eine "Ladeposition" gefahren. Das Bearbeiten wird abgebrochen (S₂₄).

In dem Bearbeitungsprozess wird nach dem Schritt S₂₆ ein Schritt S₂₈ durchgeführt, bei dem abgefragt wird, ob ein Bearbeitungs-/Drehmoment T_{P} anliegt. Wenn dies der Fall ist, wird im Schritt S₃₀ die Regelung gemäß Fig. 5, Fig. 6 durchgeführt, wobei die Vorschubgeschwindigkeit gemäß der Regler-Einstellung (z.B. linear-proportional) eingestellt wird.

Nach den Schritten S₂₈ und S₃₀ wird in Schritt S₃₂ abgefragt, ob ein Drehmoment-Schwellenwert überschritten worden ist oder eine Maximalauslenkung A überschritten worden ist. Wenn eine dieser Bedingungen erfüllt ist, wird im Schritt S₄₂ der Vorschub gestoppt, und im Schritt S₄₆ erfolgt ein Rückhub, sowie anschließend wieder ein Anfahren gemäß Parametrisierung, d.h. zurück zum Anfang von Schritt S₂₈.

Sofern im Schritt S₃₂ keine der Bedingungen erfüllt ist, wird im Schritt S₃₄ abgefragt, ob die maximale Bearbeitungszeit überschritten worden ist. Wenn dies der Fall ist, erfolgt im Schritt S₄₄ eine Rückfahrt auf die "Ladeposition", und das Bearbeiten wird abgebrochen. Beispielsweise kann das der Fall sein, wenn eine von dem Spanwerkzeug 24 hergestellte Bohrung einen zu geringen Durchmesser D₃ hat.

Im Schritt S₃₆ (nein im Schritt S₃₄) wird abgefragt, ob eine Bearbeitungs-Endposition erreicht ist (entsprechend x_{MAX} in Fig. 7). Wenn dies der Fall ist, ist der Bearbeitungsprozess 134 beendet. Hierbei kann im Schritt S₃₈ abgefragt werden, ob ein sogenanntes "Ausfunken" erfolgen soll.

Unter einem Ausfunken wird vorliegend verstanden, dass das Bearbeitungswerkzeug mit dem Schaftabschnitt noch wenigstens ein- oder zweimal innerhalb der Bohrung vor und zurück bewegt wird, um eine kalibrierte Oberfläche zu erzielen.

Wenn kein Ausfunken erfolgen soll, erfolgt im Schritt S₄₀ eine Rückfahrt auf die Ladeposition, und der Bearbeitungsprozess ist abgeschlossen.

Anderenfalls erfolgt im Schritt S₄₈ ein Ausfunk-Prozess.

## Patentansprüche

1. Verfahren zur Feinbearbeitung einer zylindrischen Werkstückfläche (16) eines Werkstückrohlings (14) mittels eines Feinbearbeitungswerkzeuges (26), mit den Schritten:
- Erzeugen einer Relativrotation (n_{W}) zwischen einem Werkzeug (26) und einem Werkstückrohling (14) um eine Bearbeitungsachse (18) herum, die konzentrisch ist zu einer zylindrischen Werkstückfläche (16) des Werkstückrohlings (14), wobei das Werkzeug entweder ein Dornhonwerkzeug, das einen zylindrischen hülsenartigen Honabschnitt hat, oder ein einteiliges Werkzeug ist, das im Wesentlichen dornförmig ausgebildet ist und einen Konusabschnitt und einen Schaftabschnitt hat;
- Erzeugen einer relativen Vorschubgeschwindigkeit (v_{W}; v_{F}) zwischen dem Werkzeug (26) und dem Werkstückrohling (14) entlang der Bearbeitungsachse (18)
- der Vorschubgeschwindigkeit (v_{F}) wird zumindest abschnittsweise eine relative Oszillationsbewegung (v_{O}) überlagert;
**gekennzeichnet durch**
- Erfassen eines Istwertes (T_{PIST}; F_{PIST}) einer Prozessgröße (T_{P}; F_{P}), die eine Funktion eines relativen Drehmomentes zwischen dem Werkzeug (26) und dem Werkstückrohling (14) ist und die eine Vielzahl von Prozessgrößenwerten annehmen kann; und
- stetiges Regeln der Prozessgröße (T_{P}; F_{P}) durch Verändern der relativen Vorschubgeschwindigkeit (v_{W}, v_{F}), derart, dass die relative Vorschubgeschwindigkeit (v_{W}; v_{F}) sich umso mehr ändert, je mehr der Istwert (T_{PIST}; F_{RIST}) der Prozessgröße von einem Sollwert (T_{PSOLL}; F_{PSOLL}) der Prozessgröße (T_{P}; F_{P}) abweicht,
wobei die Oszillationsbewegung eine Frequenz in einem Bereich von 30 Hz bis 100 Hz hat.

2. Verfahren nach Anspruch 1, **dadurch gekennzeichnet, dass** eine Differenz zwischen dem Sollwert (T_{PSOLL}, F_{PSOLL}) der Prozessgröße und dem Istwert (T_{PIST}; F_{PIST}) der Prozessgröße einem Regler (90) eingegeben wird, der eine Stellgröße (v) ausgibt, die einen Antriebsmotor (119) zum Erzeugen der Vorschubgeschwindigkeit (v_{W}; v_{F}) ansteuert.

3. Verfahren nach Anspruch 1 oder 2, **dadurch gekennzeichnet, dass** die Prozessgröße (T_{P}; F_{P}) zusätzlich eine Funktion einer axialen Relativkraft zwischen dem Werkzeug (26) und dem Werkstückrohling (14) ist.

4. Verfahren nach einem der Ansprüche 1 - 3,**dadurch gekennzeichnet, dass** die Prozessgröße (T_{P}; F_{P}) ein Drehmoment ist.

5. Verfahren nach einem der Ansprüche 1 - 4, **dadurch gekennzeichnet, dass** eine axiale Vorschubbewegung (V_{F}) unterbrochen wird, wenn eine axiale Relativkraft (F_{P}) zwischen dem Werkzeug (26) und dem Werkstückrohling (14) einen Axialkraft-Schwellenwert (A_{MAX}) überschreitet und/oder wenn ein relatives Drehmoment (T_{P}) zwischen dem Werkzeug (26) und dem Werkstückrohling (14) einen Drehmoment-Schwellenwert überschreitet.

6. Verfahren nach Anspruch 5, **dadurch gekennzeichnet, dass** nach dem Unterbrechen der Vorschubbewegung ein der Vorschubgeschwindigkeit (v_{F}) entgegen gerichteter Rückhub (v_{R}) durchgeführt wird.

7. Verfahren nach einem der Ansprüche 1 - 6, **dadurch gekennzeichnet, dass** eine zur Bearbeitung eines Werkstückrohlings (14) benötigte Arbeit erfasst wird.

8. Verfahren nach einem der Ansprüche 1 - 7, **dadurch gekennzeichnet, dass** die relative Oszillationsbewegung (v_{O}) eine Amplitude in einem Bereich von 0,5 mm bis 4 mm aufweist.

9. Verfahren nach einem der Ansprüche 1 - 8, **dadurch gekennzeichnet, dass** vor dem Erzeugen der relativen Vorschubgeschwindigkeit (v_{F}) ein Einfahrprozess (132) durchgeführt wird, bei dem erfasst wird, ob eine Bearbeitung des Werkstückrohlings (14) mit dem Werkzeug (26) möglich ist.

10. Verfahren nach einem der Ansprüche 1 - 9, **dadurch gekennzeichnet, dass** das Werkzeug (26) einen Konusabschnitt (34) aufweist, wobei vor dem Erzeugen der relativen Vorschubgeschwindigkeit der Werkstückrohling (14) und das Werkzeug (26) relativ zueinander bewegt werden, bis der Konusabschnitt (34) eine Ringkante (17) des Werkstückrohlings (14) berührt, wobei die hierbei eingerichtete axiale Relativposition zwischen dem Werkzeug (26) und dem Werkstückrohling (14) erfasst wird.

11. Verfahren nach einem der Ansprüche 1 - 9, **dadurch gekennzeichnet, dass** das Werkzeug (26) einen Konusabschnitt (34) aufweist, wobei der Werkstückrohling (14) und das Werkzeug (26) relativ zueinander in eine Einfahrposition bewegt werden, bis zumindest ein Teil des Konusabschnittes (34) sich axial mit der zylindrischen Werkstückfläche (16) überschneidet, eine Ringkante (17) der zylindrischen Werkstückfläche (16) jedoch von dem Werkzeug (26) nicht berührt wird.

12. Verfahren nach Anspruch 11, wobei nach dem Erreichen der Einfahrposition die relative Vorschubgeschwindigkeit erzeugt und die Prozessgröße durch Verändern der relativen Vorschubgeschwindigkeit geregelt wird.

13. Vorrichtung zum Bearbeiten von zylindrischen Werkstückflächen (18), mit
- einer Spanneinrichtung (12) für ein Werkstück (14);
- einem Werkzeug (26) zur Bearbeitung einer zylindrischen Werkstückfläche (16) des Werkstückes (14), wobei das Werkzeug entweder ein Dornhonwerkzeug, das einen zylindrischen hülsenartigen Honabschnitt hat, oder ein einteiliges Werkzeug ist, das im Wesentlichen dornförmig ausgebildet ist und einen Konusabschnitt und einen Schaftabschnitt hat;
- einem Rotationsantrieb (20), um eine Relativrotation (n_{W}) zwischen dem Werkstück (14) und dem Werkzeug (26) einzurichten;
- einem Axialantrieb (40), um eine relative Vorschubgeschwindigkeit (v_{F}) zwischen dem Werkstück (14) und dem Werkzeug (26) einzurichten;
- eine Steuervorrrichtung (56), die dazu eingerichtet ist, der Vorschubgeschwindigkeit (v_{F}) zumindest abschnittsweise eine relative Oszillationsbewegung (v_{O}) zu überlagern:
**gekennzeichnet durch**
- Erfassen eines Istwertes (T_{PIST}; F_{PIST}) einer Prozessgröße (T_{P}; F_{P}), die eine Funktion eines relativen Drehmoments zwischen dem Werkzeug (26) und einem Werkstückrohling (14), an dem die zylindrische Werkstückfläche (18) ausgebildet ist, und die eine Vielzahl von Prozessgrößenwerten annehmen kann; und
- stetiges Regeln der Prozessgröße (T_{P}; F_{P}) durch Verändern einer relativen Vorschubgeschwindigkeit (v_{W}, v_{F}), derart, dass die relative Vorschubgeschwindigkeit (v_{W}; v_{F}) sich umso mehr ändert, je mehr der Istwert (T_{PIST}; F_{PIST}) der Prozessgröße von einem Sollwert (T_{PSOLL}; F_{PSOLL}) der Prozessgröße (T_{P}; F_{P}) abweicht;
wobei die Oszillationsbewegung eine Frequenz in einem Bereich von 30 Hz bis 100 Hz hat.

14. Vorrichtung nach Anspruch 13, **dadurch gekennzeichnet, dass** die Prozessgröße (T_{P}; F_{P}) ein Drehmoment ist.

## Claims

1. A method for fine machining a cylindrical workpiece surface (16) of a workpiece blank (14) by means of a fine machining tool (26), comprising the steps of:
- generating a relative rotation (n_{W}) between a tool (26) and a workpiece blank (14) about a machining axis (18) which is concentric with a cylindrical workpiece surface (16) of the workpiece blank (14), wherein the tool is either a mandrel honing tool having a cylindrical sleeve-like honing portion or a one-piece tool which is substantially mandrel-shaped and has a cone portion and a shank portion;
- generating a relative feed rate (v_{W}; v_{F}) between the tool (26) and the workpiece blank (14) along the machining axis (18)
- a relative oscillation movement (v_{O}) is superimposed on the feed speed (v_{F}) at least in sections;
**characterized by**
- detecting an actual value (T_{PIST}; F_{PIST}) of a process variable (T_{P}; F_{P}), which is a function of a relative torque between the tool (26) and the workpiece blank (14) and which can assume a plurality of process variable values; and
continuously controlling the process variable (T; F_{PP}) by changing the relative feed rate (v_{W}, v_{F}) in such a way that the relative feed rate (v_{W}; v_{F}) changes the more the actual value (T_{PIST}; F_{PIST}) of the process variable deviates from a setpoint value (T_{PSOLL}; F_{PSOLL}) of the process variable (T_{P}; F_{P}),
wherein the oscillation movement has a frequency in a range from 30 Hz to 100 Hz.

2. The method according to claim 1, **characterized in that** a difference between the setpoint value (T_{PSOLL}, F_{PSOLL}) of the process variable and the actual value (T_{PIST}; F_{PIST}) of the process variable is input to a controller (90) which outputs a control variable (v) which controls a drive motor (119) for generating the feed rate (v_{W}; v_{F}).

3. The method according to claim 1 or 2, **characterized in that** the process variable (T_{P}; F_{P}) is additionally a function of an axial relative force between the tool (26) and the workpiece blank (14).

4. The method according to one of claims 1 - 3, **characterized in that** the process variable (T_{P}; F_{P}) is a torque.

5. The method according to one of claims 1 - 4, **characterized in that** an axial feed movement (V_{F}) is interrupted when an axial relative force (F_{P}) between the tool (26) and the workpiece blank (14) exceeds an axial force threshold value (A_{MAX}) and/or when a relative torque (T_{P}) between the tool (26) and the workpiece blank (14) exceeds a torque threshold value.

6. The method according to claim 5, **characterized in that** after the interruption of the feed movement, a return stroke (v_{R}) directed in the opposite direction to the feed speed (v_{F}) is carried out.

7. The method according to one of claims 1 - 6, **characterized in that** a work required for processing a workpiece blank (14) is recorded.

8. The method according to one of claims 1 - 7, **characterized in that** the relative oscillation movement (v_{O}) has an amplitude in a range from 0.5 mm to 4 mm.

9. The method according to one of claims 1 - 8, **characterized in that** before the relative feed rate (v_{F}) is generated, a running-in process (132) is carried out, in which it is detected whether machining of the workpiece blank (14) with the tool (26) is possible.

10. The method according to one of claims 1 - 9, **characterized in that** the tool (26) has a cone portion (34), wherein before the relative feed rate is generated, the workpiece blank (14) and the tool (26) are moved relative to one another until the cone portion (34) contacts an annular edge (17) of the workpiece blank (14), wherein the axial relative position between the tool (26) and the workpiece blank (14) established in this process is detected.

11. The method according to one of claims 1 - 9, **characterized in that** the tool (26) has a cone portion (34), wherein the workpiece blank (14) and the tool (26) are moved relative to one another into a retracted position until at least a part of the cone portion (34) axially overlaps with the cylindrical workpiece surface (16), but an annular edge (17) of the cylindrical workpiece surface (16) is not contacted by the tool (26).

12. The method according to claim 11, wherein the relative feed rate generated after reaching the entry positionand the process variable is controlled by changing the relative feed rate.

13. A device for machining cylindrical workpiece surfaces (18), comprising
- a clamping device (12) for a workpiece (14);
- a tool (26) for machining a cylindrical workpiece surface (16) of the workpiece (14), the tool being either a mandrel honing tool having a cylindrical sleeve-like honing portion or a one-piece tool which is substantially mandrel-shaped and has a cone portion and a shank portion;
- a rotary drive (20) for establishing a relative rotation (n_{W}) between the workpiece (14) and the tool (26);
- an axial drive (40) for establishing a relative feed speed (v_{F}) between the workpiece (14) and the tool (26);
- a control device (56) which is configured to superimpose a relative oscillation movement (v_{O}) on the feed speed (v_{F}) at least in sections:
**characterized by**
- detecting an actual value (T_{PIST}; F_{PIST}) of a process variable (T_{P}; F_{P}), which is a function of a relative torque between the tool (26) and a workpiece blank (14) on which the cylindrical workpiece surface (18) is formed, and which can assume a plurality of process variable values; and
- continuously controlling the process variable (T; F_{PP}) by changing a relative feed rate (v_{W}, v_{F}) in such a way that the relative feed rate (v_{W}; v_{F}) changes the more the actual value (T_{PIST}; F_{PIST}) of the process variable deviates from a setpoint value (T_{PSOLL}; F_{PSOLL}) of the process variable (T_{P}; F_{P});
whereby the oscillation movement has a frequency in a range from 30 Hz to 100 Hz.

14. The device according to claim 13, **characterized in that** the process variable (T_{P}; F_{P}) is a torque.

## Revendications

1. Procédé pour l'usinage de précision d'une face de pièce à usiner cylindrique (16) d'une ébauche de pièce à usiner (14) au moyen d'un outil d'usinage de précision (26), avec les étapes de :
- génération d'une rotation relative (n_{w}) entre un outil (26) et une ébauche de pièce à usiner (14) autour d'un axe d'usinage (18) qui est concentrique à une face de pièce à usiner cylindrique (16) de l'ébauche de pièce à usiner (14), dans lequel l'outil est soit un outil d'honage à mandrin, qui a une section d'honage de type manchon cylindrique, soit un outil d'une pièce qui est réalisé essentiellement en forme de mandrin et a une section de cône et une section de tige ;
- génération d'une vitesse d'avance relative (v_{W}; v_{F}) entre l'outil (26) et l'ébauche de pièce à usiner (14) le long de l'axe d'usinage (18) ;
- un mouvement d'oscillation relatif (v_{O}) est superposé à la vitesse d'avance (v_{F}) au moins par sections ;
**caractérisé par** la
- détection d'une valeur réelle (T_{PIST} ; F_{PIST}) d'une grandeur de processus (T_{P} ; F_{P}) qui est une fonction d'un couple de rotation relatif entre l'outil (26) et l'ébauche de pièce à usiner (14) et qui peut adopter une pluralité de valeurs de grandeur de processus ; et
- régulation constante de la grandeur de processus (T_{P} ; F_{P}) par modification de la vitesse d'avance relative (v_{W}, v_{F}) de telle sorte que la vitesse d'avance relative (v_{W}; v_{F}) se modifie d'autant plus que la valeur réelle (T_{PIST} ; F_{PIST}) de la grandeur de processus diffère d'une valeur de consigne (T_{PSOLL} ; F_{PSOLL}) de la grandeur de processus (T_{P} ; F_{P}),
dans lequel le mouvement d'oscillation a une fréquence dans une région de 30 Hz à 100 Hz.

2. Procédé selon la revendication 1, **caractérisé en ce qu'**une différence entre la valeur de consigne (T_{PSOLL}, F_{PSOLL}) de la grandeur de processus et la valeur réelle (T_{PIST} ; F_{PIST}) de la grandeur de processus est entrée dans un régulateur (90) qui émet une grandeur de réglage (v) qui commande un moteur d'entraînement (119) pour la génération de la vitesse d'avance (v_{W} ; v_{F}).

3. Procédé selon la revendication 1 ou 2, **caractérisé en ce que** la grandeur de processus (T_{P}; F_{P}) est en outre une fonction d'une force relative axiale entre l'outil (26) et l'ébauche de pièce à usiner (14).

4. Procédé selon une des revendications 1 à 3, **caractérisé en ce que** la grandeur de processus (T_{P} ; F_{P}) est un couple de rotation.

5. Procédé selon une des revendications 1 à 4, **caractérisé en ce qu'**un mouvement d'avance axial (V_{F}) est interrompu lorsqu'une force relative axiale (F_{P}) entre l'outil (26) et l'ébauche de pièce à usiner (14) dépasse une valeur seuil de force axiale (A_{MAX}) et/ou lorsqu'un couple de rotation relatif (T_{P}) entre l'outil (26) et l'ébauche de pièce à usiner (14) dépasse une valeur seuil de couple de rotation.

6. Procédé selon la revendication 5, **caractérisé en ce qu'**une course de retour (V_{R}) orientée contre la vitesse d'avance (v_{F}) est réalisée après l'interruption du mouvement d'avance.

7. Procédé selon une des revendications 1 à 6, **caractérisé en ce qu'**un travail nécessaire pour l'usinage d'une ébauche de pièce à usiner (14) est détecté.

8. Procédé selon une des revendications 1 à 7, **caractérisé en ce que** le mouvement d'oscillation relatif (v_{O}) présente une amplitude dans une région de 0,5 mm à 4 mm.

9. Procédé selon une des revendications 1 à 8, **caractérisé en ce qu'**un processus d'escamotage (132) est réalisé avant la génération de la vitesse d'avance relative (v_{F}), lors duquel il est détecté si un usinage de l'ébauche de pièce à usiner (14) est possible avec l'outil (26).

10. Procédé selon une des revendications 1 à 9, **caractérisé en ce que** l'outil (26) présente une section de cône (34), dans lequel l'ébauche de pièce à usiner (14) et l'outil (26) sont déplacés l'un par rapport à l'autre avant la génération de la vitesse d'avance relative jusqu'à ce que la section de cône (34) touche une arête annulaire (17) de l'ébauche de pièce à usiner (14), dans lequel la position relative axiale configurée ce faisant entre l'outil (26) et l'ébauche de pièce à usiner (14) est détectée.

11. Procédé selon une des revendications 1 à 9, **caractérisé en ce que** l'outil (26) présente une section de cône (34), dans lequel l'ébauche de pièce à usiner (14) et l'outil (26) sont déplacés l'un par rapport à l'autre dans une position d'escamotage jusqu'à ce qu'au moins une partie de la section de cône (34) s'imbrique axialement dans la face de pièce à usiner cylindrique (16) mais qu'une arête annulaire (17) de la face de pièce à usiner cylindrique (16) n'est pas touchée par l'outil (26).

12. Procédé selon la revendication 11, dans lequel la vitesse d'avance relative est générée après l'atteinte de la position d'escamotage et la grandeur de processus est régulée par modification de la vitesse d'avance relative.

13. Dispositif pour l'usinage de faces de pièce à usiner cylindriques (18), avec
- une installation de serrage (12) pour une pièce à usiner (14) ;
- un outil (26) pour l'usinage d'une face de pièce à usiner cylindrique (16) de la pièce à usiner (14), dans lequel l'outil est soit un outil d'honage à mandrin, qui a une section d'honage de type manchon cylindrique, soit un outil d'une pièce qui est réalisé essentiellement en forme de mandrin et a une section de cône et une section de tige ;
- un entraînement rotatif (20) pour configurer une rotation relative (n_{w}) entre la pièce à usiner (14) et l'outil (26) ;
- un entraînement axial (40) pour configurer une vitesse d'avance relative (v_{F}) entre la pièce à usiner (14) et l'outil (26) ;
- un dispositif de commande (56) qui est configuré pour superposer un mouvement d'oscillation relatif (v_{O}) à la vitesse d'avance (v_{F}) au moins par sections ;
**caractérisé par** la
- détection d'une valeur réelle (T_{PIST} ; F_{PIST}) d'une grandeur de processus (T_{P} ; F_{P}) qui est une fonction d'un couple de rotation relatif entre l'outil (26) et une ébauche de pièce à usiner (14) sur laquelle la face de pièce à usiner cylindrique (18) est réalisée, et qui peut adopter une pluralité de valeurs de grandeur de processus ; et
- régulation constante de la grandeur de processus (T_{P}; F_{P}) par modification d'une vitesse d'avance relative (v_{W}, v_{F}) de telle sorte que la vitesse d'avance relative (v_{W} ; v_{F}) se modifie d'autant plus que la valeur réelle (T_{PIST} ; F_{PIST}) de la grandeur de processus diffère d'une valeur de consigne (T_{PSOLL} ; F_{PSOLL}) de la grandeur de processus (T_{P} ; F_{P}) ;
dans lequel le mouvement d'oscillation a une fréquence dans une région de 30 Hz à 100 Hz.

14. Dispositif selon la revendication 13, **caractérisé en ce que** la grandeur de processus (T_{P} ; F_{P}) est un couple de rotation.
